(19) Europäisches Patentamt
European Patent Office
Office européen des brevets

(11) EP 4 435 488 A1

(12) **EUROPEAN PATENT APPLICATION**
published in accordance with Art. 153(4) EPC

(43) Date of publication:
**25.09.2024 Bulletin 2024/39**

(21) Application number: **22914804.4**

(22) Date of filing: **27.12.2022**

(51) International Patent Classification (IPC):
***G02B 7/09*** *(2021.01)* ***G02B 15/17*** *(2006.01)*
***H04M 1/02*** *(2006.01)* ***G03B 30/00*** *(2021.01)*
***G02B 13/00*** *(2006.01)*

(52) Cooperative Patent Classification (CPC):
**G02B 7/09; G02B 13/00; G02B 15/17; G03B 30/00; H04M 1/02; H04N 23/55; H04N 23/57**

(86) International application number:
**PCT/CN2022/142398**

(87) International publication number:
**WO 2023/125551 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.12.2021 CN 202111643718**

(71) Applicant: **Huawei Technologies Co., Ltd.**
**Shenzhen, Guangdong 518129 (CN)**

(72) Inventors:
- **ZHANG, Kaiyuan**
  **Shenzhen, Guangdong 518129 (CN)**
- **YU, Xiaodan**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **OPTICAL IMAGING SYSTEM, CAMERA MODULE AND ELECTRONIC DEVICE**

(57) This application provides an optical imaging system, a camera assembly, and an electronic device. The optical imaging system is used in cooperation with an ejection mechanism. The optical imaging system includes a first lens to an $N^{th}$ lens that are sequentially disposed from an object side to an image side along an optical axis, and each of the first lens to the $N^{th}$ lens has a focal power, where $7 \leq N \leq 10$. The first lens to the $N^{th}$ lens are sequentially grouped into a first group and a second group from the object side to the image side, the first group has a positive focal power, and a distance between the second group and an image plane along the optical axis direction is fixed. The ejection structure is configured to drive the first group to eject from a non-working position to a working position along the optical axis direction. The working position and the non-working position are sequentially disposed from the object side to the image side. The optical imaging system meets the following relational expression: $0 < ImgH/TTL \leq 1$ A relationship between a total optical length and a maximum imaging height is properly configured by making the first group to eject in groups, so as to implement miniaturization and autofocus, and improve a resolution capability of the optical imaging system.

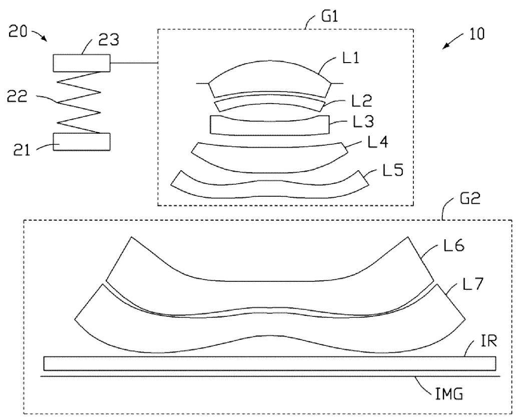

Working state

FIG. 2



Processed by Luminess, 75001 PARIS (FR)

## Description

### CROSS-REFERENCE TO RELATED APPLICATIONS

This application claims priority to Chinese Patent Application No. 202111643718.9, filed with the China National Intellectual Property Administration on December 29, 2021 and entitled "OPTICAL IMAGING SYSTEM, CAMERA ASSEMBLY, AND ELECTRONIC DEVICE", which is incorporated herein by reference in its entirety.

### TECHNICAL FIELD

This application relates to the field of optical technologies, and in particular, to an optical imaging system, a camera assembly, and an electronic device.

### BACKGROUND

With the improvement of photographing requirements of mobile phones and the improvement of imaging quality of camera assemblies, multi-camera assemblies become the mainstream of camera modules of mobile phones. A main camera lens is a most commonly used camera lens in a mobile phone camera. A main camera lens used by a flagship handset is usually 7P or a higher version, has a relatively complex surface shape and manufacturing process, and has a relatively high requirement on a lens manufacturing process and tolerance. The main camera lens has a high requirement on infinity imaging quality and macro performance. In addition, with use requirements of main camera lenses in different scenarios, miniaturization, a large image plane, and a larger F-number become the mainstream of camera modules of mobile phones.

However, an existing camera assembly of a mobile phone still has problems in functions such as night scene, snapshot, video, and background blurring, and a larger F-number and a low total imaging height have a mutual constraint relationship. A conventional main camera lens uses image plane autofocus to compensate for a defocusing amount generated when an object distance changes. A disadvantage of this manner is that dispersion generated when an object distance changes cannot be effectively compensated for.

### SUMMARY

In view of the foregoing content, it is necessary to provide an optical imaging system, a camera assembly, and an electronic device, so that the optical imaging system meets a specific requirement of a main camera lens while achieving high image quality.

A first aspect of embodiments of this application provides an optical imaging system. The optical imaging system is used in cooperation with an ejection mechanism. The optical imaging system includes a first lens to an $N^{th}$ lens that are sequentially disposed from an object side to an image side along an optical axis, and each of the first lens to the $N^{th}$ lens has a focal power, where $7 \le N \le 10$.

The first lens to the $N^{th}$ lens are sequentially grouped into a first group and a second group from the object side to the image side, the first group has a positive focal power, and a distance between the second group and an image plane along the optical axis direction is fixed. To be specific, the first group and the second group are sequentially disposed from the object side to the image side, a total quantity of lenses in the first group and the second group is N, and a quantity of lenses included in each of the first group and the second group may be set based on an actual application scenario. For example, if N=7, the first group includes five lenses, and the second group includes two lenses.

The ejection mechanism is configured to drive the first group to eject from a non-working position to a working position along the optical axis direction. The working position and the non-working position are sequentially disposed from the object side to the image side. The optical imaging system meets the following relational expression:

$$0 < ImgH/TTL \le 1.$$

TTL is a total optical length of the optical imaging system when the first group is in the working position, and ImgH is an imaging height corresponding to a half of a maximum field of angle of the optical imaging system.

In this embodiment of this application, the ejection mechanism makes the first group eject from the non-working position to the working position to implement ejection in groups, so as to implement autofocus of the optical imaging system. A correspondence between a maximum imaging height and a total optical length is properly configured, to implement an ultra-thin feature of the optical imaging system and implement miniaturization.

In some embodiments, the first group includes M lenses from the object side to the image side, where $5 \le M \le 8$;

and the second group includes two lenses from the object side to the image side. A quantity of lenses in the first group and a quantity of lenses in the second group are properly configured, to improve imaging quality of the optical imaging system.

In some embodiments, if N=7, a fourth lens, a fifth lens, and a sixth lens each have a positive focal power, and a third lens and a seventh lens each have a negative focal power.

The focal power of each lens is properly configured, to reduce a thickness of the optical imaging system and improve imaging quality of the optical imaging system.

In some embodiments, when the first group is in the non-working position, the optical imaging system meets the following relational expression:

$$0<TTL0/TTL<0.8.$$

TTL0 is a total optical length of the optical imaging system when the first group is in the non-working position.

The total optical length of the first group in the working position and the total optical length of the first group in the non-working position are properly limited, to reduce a total thickness of the optical imaging system and facilitate miniaturization design of the optical imaging system.

In some embodiments, the optical imaging system meets the following relational expression:

$$1.4\leq FNO\leq 2.4.$$

FNO is an F-number of the optical imaging system.

The F-number of the optical imaging system is properly configured, to ensure that the optical imaging system meets a requirement for a larger F-number.

In some embodiments, the optical imaging system meets the following relational expression:

$$0\leq|f2/f3|\leq 0.7.$$

f2 is an effective focal length of a second lens, and f3 is an effective focal length of the third lens.

A relationship between the effective focal lengths of the second lens and the third lens is properly configured, to reduce a thickness of the optical imaging system.

In some embodiments, the optical imaging system meets the following relational expression:

$$0\leq|fN/f|\leq 2.$$

fN is an effective focal length of the $N^{th}$ lens, and f is an effective focal length of the optical imaging system.

In some embodiments, an image side surface of the fourth lens is a convex surface.

In some embodiments, in the first lens to the $N^{th}$ lens, the $N^{th}$ lens has a maximum light transmission aperture.

A second aspect of embodiments of this application provides a camera assembly, including the optical imaging system described in the foregoing embodiments and an ejection mechanism used in cooperation with the optical imaging system.

In some embodiments, the camera assembly further includes a photosensitive element. The photosensitive element is located on an image side of the optical imaging system, a size of the photosensitive element is 1 foot, and the photosensitive element is also referred to as a target detector. A size of the target detector is increased, to improve a resolution capability of the camera assembly.

A third aspect of embodiments of this application provides an electronic device, including the camera assembly described in the foregoing embodiments.

**BRIEF DESCRIPTION OF DRAWINGS**

FIG. 1 is a diagram of a structure of a first state of an optical imaging system according to this application;
FIG. 2 is a diagram of a structure of a second state of an optical imaging system according to this application;
FIG. 3 is a diagram of a second state of an optical imaging system according to this application;

FIG. 4 is a diagram of a structure of an optical imaging system according to a first embodiment of this application;
FIG. 5 is a defocus curve diagram according to a first embodiment of this application;
FIG. 6 is a diagram of optical distortion according to a first embodiment of this application;
FIG. 7 is a diagram of a structure of an optical imaging system according to a second embodiment of this application;
FIG. 8 is a defocus curve diagram according to a second embodiment of this application;
FIG. 9 is a diagram of optical distortion according to a second embodiment of this application;
FIG. 10 is a diagram of a structure of an optical imaging system according to a third embodiment of this application;
FIG. 11 is a defocus curve diagram according to a third embodiment of this application;
FIG. 12 is a diagram of optical distortion according to a third embodiment of this application;
FIG. 13 is a diagram of a structure of an optical imaging system according to a fourth embodiment of this application;
FIG. 14 is a spherical defocus curve diagram according to a fourth embodiment of this application;
FIG. 15 is a diagram of optical distortion according to a fourth embodiment of this application;
FIG. 16 is a diagram of a structure of an optical imaging system according to a fifth embodiment of this application;
FIG. 17 is a defocus curve diagram according to a fifth embodiment of this application;
FIG. 18 is a diagram of optical distortion according to a fifth embodiment of this application;
FIG. 19 is a diagram of a structure of an optical imaging system according to a sixth embodiment of this application;
FIG. 20 is a defocus curve diagram according to a sixth embodiment of this application;
FIG. 21 is a diagram of optical distortion according to a sixth embodiment of this application;
FIG. 22 is a diagram of a structure of a camera assembly according to an embodiment of this application; and
FIG. 23 is a diagram of a structure of an electronic device according to an embodiment of this application.

Description of reference signs of main elements:

| | |
|---|---|
| Optical imaging system | 10 |
| Ejection mechanism | 20 |
| Fastener | 21 |
| Elastic part | 22 |
| Ejection part | 23 |
| First lens | L1 |
| Second lens | L2 |
| Third lens | L3 |
| Fourth lens | L4 |
| Fifth lens | L5 |
| Sixth lens | L6 |
| First group | G1 |
| Second group | G2 |
| Light filter | IR |
| Image plane | IMG |
| Camera assembly | 100 |
| Photosensitive element | 30 |

| | |
|---|---|
| Housing | 200 |
| Electronic device | 1000 |

## DESCRIPTION OF EMBODIMENTS

The following describes embodiments of this application with reference to accompanying drawings in embodiments of this application.

To make the objectives, technical solutions, and advantages of this application clearer and more comprehensible, the following further describes this application in detail with reference to the accompanying drawings and embodiments. It should be understood that the specific embodiments described herein are merely used to explain this application but are not intended to limit this application. All other embodiments obtained by a person of ordinary skill in the art based on embodiments of this application without creative efforts shall fall within the protection scope of this application.

In the descriptions of this application, it should be understood that, directions or position relationships indicated by terms "center", "longitudinal", "transverse", "length", "width", "thickness", "up", "down", "in front of", "behind", "left", "right", "vertical", "horizontal", "top", "bottom", "inside", "outside", "clockwise", "counterclockwise", and the like are based on directions or position relationships shown in the accompanying drawings, and are merely intended for ease of describing this application and simplifying descriptions, instead of indicating or implying that an indicated apparatus or element needs to have a particular direction or be constructed and operated in a particular direction, and therefore shall not be understood as limitations on this application. In addition, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the description of this application, "a plurality of" means two or more than two, unless otherwise specifically limited.

In the description of this application, it should be noted that, unless otherwise expressly specified and limited, the terms "installation", "connected", and "connection" should be understood broadly. For example, a connection may be a fixed connection, a detachable connection, or an integrated connection. Alternatively, a connection may be a mechanical connection or an electrical connection, or may mean mutual communication. Alternatively, a connection may be a direct connection, or an indirect connection through an intermediate medium, or may be a connection between two elements or an interaction relationship between two elements. A person of ordinary skill in the art may interpret specific meanings of the foregoing terms in this application according to specific cases.

In this application, unless otherwise expressly specified and limited, the first feature "above" or "below" the second feature may include direct contact between the first feature and the second feature, or may include contact between the first feature and the second feature by using another feature between the first feature and the second feature instead of direct contact. In addition, that the first feature is "above" the second feature includes that the first feature is right above or obliquely above the second feature or merely indicates that the first feature is horizontally higher than the second feature. That the first feature is "below" the second feature includes that the first feature is right above or obliquely above the second feature or merely indicates that the first feature is horizontally lower than the second feature.

The following disclosure provides many different implementations or examples for implementing different structures of this application. To simplify the disclosure of this application, the following describes components and settings in specific examples. Certainly, the components and settings are merely examples, and are not intended to limit this application. Further, this application may repeat reference numerals and/or reference letters in different examples, and the repetition is for the purpose of simplicity and clarity and does not indicate the relationship between the various implementations and/or settings discussed. In addition, this application provides examples of various specific processes and materials. However, a person of ordinary skill in the art may be aware of application of another process and/or use of another material.

For ease of understanding, the following first explains and describes technical terms in this application.

An optical axis is a direction in which light is transmitted by an optical system, and is main light of a center field of view. For a symmetric transmission system, an optical axis usually coincides with a rotation center line of an optical system. For an off-axis reflective system, an optical axis is also presented as a broken line.

In terms of a focal light, when light parallel to an optical axis enters a convex lens, ideally, for the convex lens, all light is converged to one point behind the lens. This point to which all the light is converged is a focal point.

Afocal length (focal length), also referred to as a focus length, is a metric for measuring light aggregation or divergence in an optical system, and is a distance from an optical center of a lens or a lens group to a focal point when an infinitely distant object forms a clear image through the lens or the lens group on a focal plane, or may be understood as a vertical distance from an optical center of the lens or the lens group to the focal plane. From a practical perspective, the focal length may be understood as a distance from a center of a lens to an imaging plane. For a fixed-focus lens, a location of an optical center of the fixed-focus lens is fixed, and therefore a focal length is fixed. For a zoom lens, a change of an optical center of the zoom lens causes a change of a focal length of the zoom lens, and therefore, a focal length can be adjusted.

A spherical surface and an aspheric surface are mainly for geometric shapes of lenses (such as various camera lenses and microscope lens) and spectacle lens (including contact lenses), and refer to a spherical lens and an aspheric lens. A difference in geometric shapes between the spherical lens and the aspheric lens determines a difference in a refraction direction of parallel incident light passing through the spherical lens and the aspheric lens, and this affects imaging effect.

The spherical lens has a spherical arc, and has an arc-shaped cross-section. When light of different wavelengths is incident at different positions on the lens by using a parallel optical axis, a point cannot be focused on a film plane (a plane that is perpendicular to a lens center and a lens focus and that passes through the focus). This results in a problem of an aberration and affects image quality, for example, a phenomenon such as definition decrease and deformation occurs.

The aspheric lens has an aspheric arc, but an edge part of the lens is slightly cut off, and a cross-section of the lens is plane-shaped. When light is incident to an aspheric reflective surface, the light can be focused on a point, to be specific, on a film plane, to eliminate an aberration.

A lens is used as a boundary, a side on which a photographed object is located is an object side, and a surface of the lens that is close to the object side is referred to as an object side surface.

A lens is used as a boundary, a side on which an image of a photographed object is located is an image side, and a surface of the lens that is close to the image side is referred to as an image side surface.

An embodiment of this application provides an optical imaging system 10, to meet requirements for a low total imaging height, a larger F-number, and a large target surface, and implement higher imaging quality. The following describes, in detail with reference to the accompanying drawings, an optical imaging system 10 provided in an embodiment of this application.

It should be noted that the "optical imaging system" in embodiments of this application may also be expressed as an "optical system" or an "optical lens" in some embodiments.

Refer to FIG. 1. The optical imaging system 10 in this embodiment of this application includes a first lens to an $N^{th}$ lens that are sequentially disposed from an object side to an image side along an optical axis, and each of the first lens to the $N^{th}$ lens has a focal power, where $7 \leq N \leq 10$. The optical imaging system 10 is used in cooperation with an ejection mechanism 20.

As shown in FIG. 1, N=7, and the optical imaging system 10 includes a first lens L1, a second lens L2, a third lens L3, a fourth lens L4, a fifth lens L5, a sixth lens L6, a seventh lens L7, and an image plane IMG that are sequentially disposed from the object side to the image side along the optical axis. The seven lenses from the first lens L1 to the seventh lens L7 are grouped into a first group G1 and a second group G2. The first group G1 has a positive focal power. A distance between the second group G2 and the image plane is fixed along the optical axis direction. The ejection mechanism 20 is connected to the first group G1. The ejection mechanism 20 is configured to drive the first group G1 to eject from a non-working position shown in FIG. 1 to a working position shown in FIG. 2, and implement autofocus of the optical imaging system 10.

When the first group G1 is in the non-working position, the optical imaging system 10 is in a non-working state. When the first group G1 is in the working position, the optical imaging system 10 is in a working state.

When the first group G1 is in the working position, the optical imaging system 10 may work normally and be used. When the first group G1 is in the non-working position, the optical imaging system 10 is in the non-working state.

In this embodiment, the ejection mechanism 20 includes a fastener 21, an elastic part 22, and an ejection part 23. One end of the elastic part 22 is connected to the fastener 21, and the other end of the elastic part 22 is connected to the ejection part 23. The first group G1 is accommodated in the ejection part 23. The elastic part 22 may drive the ejection part 23 to move through control of expansion and contraction of the elastic part 22, and the ejection part 23 drives the first group G1 to eject from the non-working position to the working position. The elastic part 22 may be a spring, a spring plate part, or the like.

Optionally, the fastener 21 and the ejection part 23 include magnetic parts. The corresponding magnetic parts are charged, so that the fastener 21 and the ejection part 23 are mutually exclusive and stretch the elastic part 22, and then the ejection part 23 drives the first group G1 to eject from the non-working position to the working position. Further, a current direction is changed, so that the fastener 21 and the ejection part 23 after charging attract each other and compress the elastic part 22, and then the ejection part 23 drives the first group G1 to return from the working position to the non-working position.

It may be understood that the ejection mechanism 20 shown in FIG. 1 is merely an example provided in this application. A specific structure of the ejection mechanism 20 is not limited in this application, provided that the ejection mechanism 20 can drive the first group G1 to eject from the non-working position to the working position. Therefore, the ejection mechanism 20 is not displayed in the following embodiments of this application.

Optionally, the ejection mechanism 20 is further configured to move the first group G1 from the working position to the non-working position. Certainly, the first group G1 may be alternatively moved from the working position to the non-working position by another mechanism. This is not limited in this application.

FIG. 3 is a diagram of a combination of the ejection mechanism 20 and the optical imaging system 10 according to this application. The ejection mechanism 20 is connected to the first group G1, and the ejection mechanism 20 may drive the first group G1 to eject relative to the second group G2.

A quantity of lenses shown in FIG. 1 is 7. It may be understood that the quantity of lenses may be alternatively 8, 9, or 10. The foregoing specific lenses are distributed to the first group G1 and the second group G2. To be specific, a quantity of lenses in the first group G1 and the second group G2 may be 8, 9, or 10, and is the same as a total quantity of lenses in the optical imaging system 10.

In some embodiments, the optical imaging system 10 meets the following relational expression:

$$0 < ImgH/TTL \leq 1.$$

TTL is a total optical length of the optical imaging system 10 when the first group G1 is in the working position, and ImgH is an imaging height corresponding to a half of a maximum field of angle of the optical imaging system 10.

In this way, the ejection mechanism 20 makes the first group G1 eject from the non-working position to the working position to implement ejection in groups, so as to implement autofocus of the optical imaging system 10. A correspondence between a maximum imaging height and a total optical length is properly configured, to implement an ultra-thin feature of the optical imaging system 10 and implement miniaturization.

In an embodiment, the ejection mechanism 20 drives the first group G1 to eject from the non-working position to the working position, and the first group G1 is moved by 0.6 mm along the optical axis direction.

In some embodiments, the first group G1 includes M lenses from the object side to the image side, where $5 \leq M \leq 8$; and the second group G2 includes two lenses from the object side to the image side. A quantity of lenses in the first group G1 and a quantity of lenses in the second group G2 are properly configured, to improve imaging quality of the optical imaging system 10.

In some embodiments, if N=7, the fourth lens L4, the fifth lens L5, and the sixth lens L6 each have a positive focal power, and the third lens L3 and the seventh lens L7 each have a negative focal power. The focal power of each lens is properly configured, to reduce a thickness of the optical imaging system and improve imaging quality of the optical imaging system 10.

In some embodiments, when the first group G1 is in the non-working position, the optical imaging system 10 meets the following relational expression:

$$0 < TTL0/TTL < 0.8.$$

TTL0 is a total optical length of the optical imaging system 10 when the first group G1 is in the non-working position. The total optical length of the first group G1 in the working position and the total optical length of the first group in the non-working position are properly limited, to reduce a total thickness of the optical imaging system 10 and facilitate miniaturization design of the optical imaging system 10.

In an embodiment, when the first group G1 is in the non-working position, a total optical length of the optical imaging system 10 is 8.12 mm. When the first group G1 is in the working position, a total optical length of the optical imaging system 10 is 11.12 mm.

In some embodiments, the optical imaging system 10 meets the following relational expression:

$1.4 \leq FNO \leq 2.4$. FNO is an F-number of the optical imaging system 10. The F-number of the optical imaging system 10 is properly configured, to ensure that the optical imaging system 10 meets a requirement for a larger F-number.

In some embodiments, the optical imaging system 10 meets the following relational expression:

$$0 \leq |f2/f3| \leq 0.7.$$

f2 is an effective focal length of the second lens L2, and f3 is an effective focal length of the third lens L3.

In some embodiments, the optical imaging system 10 includes N lenses, and the optical imaging system 10 meets the following relational expression:

$$0 \leq |fN/f| \leq 2.$$

fN is an effective focal length of the $N^{th}$ lens, and f is an effective focal length of the optical imaging system 10.

In some embodiments, an image side surface of the fourth lens L4 is a convex surface.

In some embodiments, in the first lens to the $N^{th}$ lens, the $N^{th}$ lens has a maximum light transmission aperture. The $N^{th}$ lens is a lens that is in the N lenses and that is closest to the image plane along the optical axis direction. For example, the optical imaging system includes eight lenses, and the $N^{th}$ lens is an eighth lens.

In some embodiments, the optical imaging system 10 further includes a light filter IR. The light filter IR may be an infrared filter (infrared filter, IR), and the infrared filter IR has an object side surface and an image side surface. The infrared filter IR is configured to filter light for imaging, and is specifically configured to isolate infrared light, so as to prevent the infrared light from being received by a photosensitive element, thereby preventing the infrared light from affecting a color and definition of a normal image, and improving imaging quality of the optical imaging system 10. Preferably, the infrared filter IR is an infrared cut-off filter.

In some embodiments, the optical imaging system 10 further includes transparent protective glass (not shown in the figure), the protective glass has an object side surface and an image side surface, and the protective glass is configured to protect the photosensitive element.

**First embodiment**

Refer to FIG. 4. An optical imaging system 10 in the first embodiment sequentially includes a first lens L1, a second lens L2, a third lens L3, a fourth lens L4, a fifth lens L5, a sixth lens L6, a seventh lens L7, a light filter IR, and an image plane IMG from an object side to an image side.

For ease of description, in the following embodiments, f1 represents a focal length of the first lens L1, f2 represents a focal length of the second lens L2, f3 represents a focal length of the third lens L3, f4 represents a focal length of the fourth lens L4, f5 represents a focal length of the fifth lens L5, f6 represents a focal length of the sixth lens L6, f7 represents a focal length of the seventh lens L7, and f represents an effective focal length of the optical imaging system 10.

The optical imaging system shown in FIG. 4 includes seven lenses. A first group G1 includes the first lens L1, the second lens L2, the third lens L3, the fourth lens L4, and the fifth lens L5. A second group G2 includes the sixth lens L6 and the seventh lens L7.

In this embodiment, the first lens L1 has a positive focal power, the second lens has a negative focal power, an object side surface of the second lens is a convex surface, the third lens has a negative focal power, the fourth lens has a negative focal power, the fifth lens has a positive focal power, the sixth lens has a negative focal power, and the seventh lens has a negative focal power.

The optical imaging system in this embodiment meets the following relational expression:

$$ImgH/TTL=0.726;$$

$$|f1/f|=0.955;$$

$$|f2/f|=2.613;$$

$$|f3/f|=4.33;$$

$$|f4/f|=-46.5;$$

$$|f5/f|=1.266;$$

$$|f6/f|=3.541;$$

$$|f7/f|=1.469;$$

and

$$TTL0/TTL=0.727.$$

Table 1 shows optical parameters of the optical imaging system 10 provided in this embodiment.

**Table 1**

| Optical parameters | |
|---|---|
| f | 9.21 mm |
| FNO | 2.18 |
| ImgH | 8.11 mm |

(continued)

| Optical parameters | |
|---|---|
| TTL | 11.11 mm |
| Design wavelengths | 650 nm, 610 nm, 555 nm, 510 nm, and 470 nm |

Table 2 shows basic parameters of lenses of the optical imaging system 10. R is a curvature radius of an optical surface, d is a thickness of a lens, Nd is a refractive index of a material, Vd is an Abbe number of the material, VD is an effective radius, and inf represents infinity.

**Table 2**

| Lens number | Surface | R (mm) | d (mm) | Vd | Nd | VD (mm) |
|---|---|---|---|---|---|---|
| L1 | Object side surface | 3.377 | 1.076 | 2.148 | 1.545 | 56.135 |
| | Image side surface | 9.613 | 0.101 | 1.962 | | |
| L2 | Object side surface | 8.374 | 0.300 | 1.919 | 1.677 | 19.245 |
| | Image side surface | 6.178 | 0.634 | 1.810 | | |
| L3 | Object side surface | -8.600 | 0.507 | 1.805 | 1.677 | 19.245 |
| | Image side surface | -26.996 | 0.439 | 2.088 | | |
| L4 | Object side surface | -22.796 | 0.908 | 2.568 | 1.545 | 56.135 |
| | Image side surface | -5.403 | 0.257 | 2.761 | | |
| L5 | Object side surface | -13.466 | 0.560 | 3.145 | 1.545 | 56.135 |
| | Image side surface | -14.916 | 3.000 | 3.493 | | |
| L6 | Object side surface | -8.441 | 0.937 | 4.909 | 1.545 | 56.135 |
| | Image side surface | -16.096 | 0.183 | 5.841 | | |
| L7 | Object side surface | -17.203 | 0.800 | 5.903 | 1.644 | 23.528 |
| | Image side surface | -42.461 | 0.790 | 6.907 | | |
| IR | Object side surface | inf | 0.43 | 7.79 | 1.516 | 64.2 |
| | Image side surface | inf | 0.237 | 8.11 | | |

Table 3 shows aspheric coefficients of lenses.

**Table 3**

| Surface | Surface type | K | A4 | A6 | A8 | A10 | A12 | A14 |
|---|---|---|---|---|---|---|---|---|
| L1 obj ect side surface | QBSF | 0 | -0.13214 4 | 0.045327 | -0.01818 3 | 0.006785 | -0.00253 0 | 0.000924 |
| L1 image side surface | QBSF | 0 | -0.15876 3 | 0.055590 | -0.02164 0 | 0.008031 | -0.00350 0 | 0.001192 |
| L2 obj ect side surface | QBSF | 0 | -0.02857 0 | 0.009594 | -0.00453 5 | 0.001669 | -0.00140 7 | 0.000470 |
| L2 image side surface | QBSF | 0 | 0.061970 | -0.01561 1 | 0.001461 | 0.000585 | -0.00089 5 | 0.000383 |
| L3 obj ect side surface | QBSF | 0 | 0.124081 | 0.010434 | -0.00391 6 | 0.000727 | -0.00040 4 | 0.000246 |
| L3 image side surface | QBSF | 0 | -0.10552 7 | 0.093055 | -0.01914 9 | 0.000979 | -0.00002 3 | -0.00003 5 |
| L4 object side surface | QBSF | 0 | -0.093155 | 0.056836 | 0.008834 | -0.011181 | 0.002147 | -0.001346 |
| L4 image side surface | QBSF | 0 | 0.155711 | 0.131357 | 0.000078 | 0.003147 | 0.010270 | -0.00484 9 |
| L5 object side surface | QBSF | 0 | 1.002434 | 0.143284 | -0.01936 1 | 0.006569 | 0.004524 | -0.00184 5 |
| L5 image side surface | QBSF | 0 | 0.750817 | 0.078294 | -0.00509 4 | -0.02687 0 | 0.000042 | -0.00434 7 |
| L6 object side surface | QBSF | 0 | 0.082578 | 0.711554 | -0.06898 8 | -0.01362 7 | 0.017818 | -0.03295 4 |
| L6 image side surface | QBSF | -5.27835875 1 | 1.635017 | 0.760138 | -0.53198 6 | 0.300762 | -0.10875 9 | -0.01635 0 |
| L7 object side surface | QBSF | -0.28172524 7 | 1.993617 | 0.103323 | 0.079578 | 0.112288 | 0.023572 | 0.061538 |
| L7 image side surface | QBSF | 0 | 3.293327 | 0.046506 | 0.321843 | 0.127097 | 0.127793 | 0.068266 |
| Surface | A16 | A18 | A20 | A22 | A24 | A26 | A28 | A30 |
| L1 object side surface | - 0.000324 | 0.000105 | -0.00002 6 | 0.000000 | 0.000000 | 0.000000 | 0.000000 | 0.000000 |
| L1 image side surface | -0.00040 4 | 0.000101 | -0.00002 6 | 0.000008 | 0.000000 | 0.000000 | 0.000000 | 0.000000 |
| L2 object side surface | -0.00017 7 | 0.000040 | -0.00001 1 | 0.000004 | 0.000000 | 0.000000 | 0.000000 | 0.000000 |
| L2 image side surface | -0.00013 0 | 0.000018 | 0.000004 | -0.00000 3 | 0.000000 | 0.000000 | 0.000000 | 0.000000 |
| L3 object side surface | -0.00011 0 | 0.000045 | -0.00001 2 | 0.000000 | 0.000005 | -0.00000 1 | 0.000000 | 0.000000 |
| L3 image side surface | 0.000227 | -0.000223 | 0.000184 | -0.00013 6 | 0.000096 | -0.00005 9 | 0.000025 | -0.00000 9 |
| L4 object side surface | 0.002017 | -0.000969 | 0.000418 | -0.00019 6 | 0.000114 | -0.00004 0 | 0.000000 | 0.000000 |
| L4 image side surface | 0.005658 | -0.003105 | 0.001804 | -0.00075 8 | 0.000335 | -0.00012 3 | 0.000046 | -0.00000 5 |
| L5 object side surface | 0.004071 | -0.001134 | 0.000673 | -0.00031 4 | 0.000367 | -0.00024 2 | 0.000152 | -0.00004 0 |
| L5 image side surface | 0.001458 | -0.000979 | 0.000782 | -0.00083 9 | 0.000577 | -0.00035 0 | 0.000161 | -0.00004 0 |

(continued)

| Surface | Surface type | K | A4 | A6 | A8 | A10 | A12 | A14 |
|---|---|---|---|---|---|---|---|---|
| L6 object side surface | -0.00585 2 | 0.001536 | -0.00112 9 | -0.00242 8 | 0.003119 | -0.00121 2 | 0.000803 | -0.00014 3 |
| L6 image side surface | -0.02465 1 | -0.002021 | -0.01037 6 | 0.009221 | 0.003815 | 0.004968 | -0.00499 2 | 0.001237 |
| L7 object side surface | -0.01953 1 | 0.034632 | -0.00798 8 | 0.018868 | 0.004680 | 0.004745 | -0.00581 3 | -0.00149 6 |
| L7 image side surface | 0.038121 | 0.027656 | 0.013869 | 0.013871 | 0.007720 | 0.005752 | 0.001121 | 0.000054 |

QBSF is a type of aspheric surface.

In this embodiment, all QBSF-type aspheric surface types z of the optical imaging system 10 may be limited by using, but not limited to, the following aspheric formula:

$$z = \frac{cr^2}{1+\sqrt{1-(K+1)c^2r^2}} + \frac{u^2(1-u^2)\sqrt{1-Kc^2r^2}}{\sqrt{1-(K+1)c^1r^2}} \sum_{m=0}^{13} a_m Q_M^{bfs}(u^2).$$

Herein, z is a vector height of an aspheric surface, r is radial coordinates of the aspheric surface, c is a spherical curvature of a vertex of the aspheric surface, K is a quadratic surface constant, and A4, A6, ..., and A30 are aspheric coefficients, and correspond to $a_1$, ..., and $a_{13}$ respectively.

FIG. 5 is a defocus curve diagram of the optical imaging system 10 according to this embodiment. As shown in FIG. 5, imaging quality (100 lp/mm) simulation results in different fields of view are shown. It can be learned from the figure that image quality in a short-focus position is greater than 0.5 in a T direction and an S direction.

In FIG. 5, a Modulation position in horizontal coordinates is a defocusing position, and modulation in vertical coordinates is modulation.

FIG. 6 is a diagram of optical distortion of an optical imaging system according to an embodiment, where a distortion curve in the diagram of optical distortion represents a difference between imaging deformation and an ideal shape in this embodiment, a horizontal coordinate is a distortion value, and a vertical coordinate is a field of view. Distortion in FIG. 6 is distortion.

It can be learned from the figure that distortion of the optical imaging system in this embodiment in a long-focus position is limited within a range of 3%.

## Second embodiment

Refer to FIG. 7. An optical imaging system 10 in the second embodiment sequentially includes a first lens L1, a second lens L2, a third lens L3, a fourth lens L4, a fifth lens L5, a sixth lens L6, a seventh lens L7, a light filter IR, and an image plane IMG from an object side to an image side.

The optical imaging system 10 shown in FIG. 7 includes seven lenses. A first group G1 includes the first lens L1, the second lens L2, the third lens L3, the fourth lens L4, and the fifth lens L5. A second group G2 includes the sixth lens L6 and the seventh lens L7.

In this embodiment, the first lens L1 has a positive focal power, the second lens has a negative focal power, an object side surface of the second lens is a convex surface, the third lens has a negative focal power, the fourth lens has a negative focal power, the fifth lens has a positive focal power, the sixth lens has a positive focal power, and the seventh lens has a negative focal power.

The optical imaging system in this embodiment meets the following relational expression:

$$ImgH/TTL=0.863;$$

$$|f1/f|=0.802;$$

$$|f2/f|=2.217;$$

$$|f3/f|=3.864;$$

$$|f4/f|=-2.002;$$

$$|f5/f|=0.763;$$

$$|f6/f|=2.048;$$

$$|f7/f|=0.230;$$

and

$$TTL0/TTL=0.68.$$

Table 4 shows optical parameters of the optical imaging system 10 provided in this embodiment.

**Table 4**

| Optical parameters | |
|---|---|
| f | 9.21 mm |
| FNO | 2.4 |
| ImgH | 8.11 mm |
| TTL | 9.4 mm |
| Design wavelengths | 650 nm, 610 nm, 555 nm, 510 nm, and 470 nm |

Table 5 shows basic parameters of lenses of the optical imaging system 10. R is a curvature radius of an optical surface, d is a thickness of a lens, Nd is a refractive index of a material, Vd is an Abbe number of the material, VD is an effective radius, and inf represents infinity.

**Table 5**

| Lens number | Surface | R (mm) | d (mm) | Vd | Nd | VD (mm) |
|---|---|---|---|---|---|---|
| L1 | Object side surface | 2.760 | 1.000 | 1.913 | 1.545 | 56.135 |
| | Image side surface | 7.627 | 0.030 | 1.749 | | |
| L2 | Object side surface | 7.669 | 0.300 | 1.730 | 1.677 | 19.245 |
| | Image side surface | 5.377 | 0.553 | 1.621 | | |
| L3 | Object side surface | -7.422 | 0.464 | 1.616 | 1.677 | 19.245 |
| | Image side surface | -32.250 | 0.314 | 1.858 | | |
| L4 | Object side surface | -11.520 | 0.689 | 2.106 | 1.545 | 56.135 |
| | Image side surface | -4.629 | 0.153 | 2.473 | | |
| L5 | Object side surface | 52.721 | 0.480 | 2.845 | 1.545 | 56.135 |
| | Image side surface | 46.268 | 3.000 | 3.165 | | |
| L6 | Object side surface | -5.718 | 0.540 | 4.248 | 1.545 | 56.135 |
| | Image side surface | -9.097 | 0.414 | 5.083 | | |
| L7 | Object side surface | -9.943 | 0.600 | 5.161 | 1.644 | 23.528 |
| | Image side surface | -13.207 | 0.475 | 5.922 | | |
| IR | Object side surface | inf | 0.300 | 7.827 | 1.545 | 56.135 |
| | Image side surface | inf | 0.088 | 8.005 | | |

Table 6 shows aspheric coefficients of lenses.

**Table 6**

| Surface | Surface type | K | A4 | A6 | A8 | A10 |
|---|---|---|---|---|---|---|
| L1 object side surface | QBSF | 0 | -0.32649015 | 0.140048278 | -0.07269399 9 | 0.033666418 |
| L1 image side surface | QBSF | 0 | -0.15186389 4 | 0.019132451 | 0.030232929 | -0.04096333 6 |
| L2 object side surface | QBSF | 0 | 0.052264047 | -0.04832125 | 0.049312006 | -0.04029765 1 |
| L2 image side surface | QBSF | 0 | 0.042134286 | -0.01110837 3 | 0.001596029 | -0.00021078 |
| L3 object side surface | QBSF | 0 | 0.110503641 | 0.009658908 | -0.00307497 8 | 0.000128673 |
| L3 image side surface | QBSF | 0 | -0.23397384 2 | 0.141582276 | -0.03257900 5 | 0.003772704 |
| L4 object side surface | QBSF | 0 | -0.04883788 7 | 0.043865526 | -0.00453167 1 | -0.00563618 7 |
| L4 image side surface | QBSF | 0 | 0.162560995 | 0.122145024 | 0.00038256 | 0.008701033 |
| L5 object side surface | QBSF | 0 | 0.980063537 | 0.118619357 | -0.00397723 9 | 0.004787639 |
| L5 image side surface | QBSF | 0 | 0.553584549 | 0.125623549 | -0.00078726 1 | -0.03813658 2 |
| L6 object side surface | QBSF | 0 | -0.61082321 2 | 0.660244392 | 0.548528678 | 0.038561491 |
| L6 image side surface | QBSF | -5.11334289 9 | -0.21219810 3 | 0.588760597 | 0.10820248 | 0.053587686 |
| L7 object side surface | QBSF | 0.401539154 | 0.096860152 | 0.173902707 | -0.61530717 8 | -0.31744314 9 |
| L7 image side surface | QBSF | 0 | 1.939214372 | 0.465004536 | -0.32885240 4 | -0.36014945 6 |
| Surface | A12 | A14 | A16 | A18 | A20 | A22 |
| L1 object side surface | -0.01386576 8 | 0.004631047 | -0.00098233 8 | -2.27519E-0 5 | 6.24879E-05 | -5.50803E-0 6 |

(continued)

| Surface | A12 | A14 | A16 | A18 | A20 | A22 |
|---|---|---|---|---|---|---|
| L1 image side surface | 0.03222794 | -0.02110036 5 | 0.010799689 | -0.00448594 6 | 0.00135328 | -9.37064E-0 5 |
| L2 object side surface | 0.026127321 | -0.01584226 | 0.007763476 | -0.00307632 5 | 0.0008146 | 1.54381E-05 |
| L2 image side surface | -0.00026445 1 | 0.000136327 | -6.86963E-0 5 | 2.56184E-05 | 1.93016E-05 | -7.18104E-0 7 |
| L3 object side surface | -0.0002243 | 0.000122495 | 4.093 82E-06 | -2.25467E-0 5 | 1.07577E-05 | 2.43957E-06 |
| L3 image side surface | -0.00231693 8 | 0.000964623 | 4.96992E-07 | 0 | 0 | 0 |
| L4 object side surface | -0.00101124 3 | 0.000693939 | 0.001045249 | -0.00032199 6 | -2.60332E-0 5 | -5.4745E-05 |
| L4 image side surface | 0.018344871 | -0.00911687 4 | 0.011696259 | -0.00320871 5 | 0.001994591 | -0.00049386 |
| L5 object side surface | 0.00670469 | 0.001181281 | 0.010340805 | -0.00154878 8 | 0.001673924 | -0.00027255 |
| L5 image side surface | -0.01226053 6 | -0.00181280 5 | 0.002125257 | 0.000633204 | -0.00063408 3 | -0.00097592 8 |
| L6 object side surface | -0.07078453 6 | -0.06180383 6 | -0.02841135 8 | -0.05553422 4 | -0.00206738 7 | -0.02077246 6 |
| L6 image side surface | -0.09946458 3 | 0.05198647 | -0.11611156 7 | 0.063811191 | -0.05137916 | 0.008165075 |
| L7 object side surface | -0.10677956 6 | 0.01804099 | -0.16286441 6 | 0.294046177 | -0.04843365 7 | 0.136898115 |
| L7 image side surface | 0.400410002 | -0.17828014 6 | 0.103011013 | 0.244557061 | 0.067232753 | 0.182338964 |
| Surface | A24 | A26 | A28 | A30 | | |
| L1 object side surface | 7.49616E-07 | -9.91593E-0 8 | 0 | 0 | | |
| L1 image side surface | -4.77193E-0 7 | 0 | 0 | 0 | | |

(continued)

| Surface | A24 | A26 | A28 | A30 | | |
|---|---|---|---|---|---|---|
| L2 object side surface | 0 | 0 | 0 | 0 | | |
| L2 image side surface | -2.01185E-0 6 | 0 | 0 | 0 | | |
| L3 object side surface | 2.65824E-06 | -6.4754E-07 | 0 | 0 | | |
| L3 image side surface | 0 | 0 | 0 | 0 | | |
| L4 object side surface | 8.71765E-05 | -3.20554E-0 5 | 0 | 0 | | |
| L4 image side surface | 0.000578891 | 0.000119452 | -0.00010623 4 | 0.00014501 | | |
| L5 object side surface | 0.00130127 | -0.00024927 7 | 0.000146132 | 0.00014782 | | |
| L5 image side surface | 0.000402916 | 0.000341657 | -0.00042024 6 | 0.000196397 | | |
| L6 object side surface | 0.026815478 | -0.01443459 | 0.01123532 | 0.001003451 | | |
| L6 image side surface | -0.03542986 7 | 0.011530358 | -0.00620794 7 | 0.006747003 | | |
| L7 object side surface | 0.037165261 | 0.085240695 | 0.002957137 | 0.041943177 | | |
| L7 image side surface | 0.151766147 | 0.08531043 | 0.075200102 | 0.041585316 | | |

QBSF is a type of aspheric surface.

In this embodiment, all QBSF-type aspheric surface types z of the optical imaging system 10 may be limited by using, but not limited to, the following aspheric formula:

$$z = \frac{cr^2}{1+\sqrt{1-(K+1)c^2r^2}} + \frac{u^2(1-u^2)\sqrt{1-Kc^2r^2}}{\sqrt{1-(K+1)c^1r^2}} \sum_{m=0}^{13} a_m Q_M^{bfs}(u^2).$$

Herein, z is a vector height of an aspheric surface, r is radial coordinates of the aspheric surface, c is a spherical curvature of a vertex of the aspheric surface, K is a quadratic surface constant, and A4, A6, ..., and A30 are aspheric coefficients, and correspond to $a_1$, ..., and $a_{13}$ respectively.

FIG. 8 is a defocus curve diagram of the optical imaging system 10 according to this embodiment. As shown in FIG. 8, imaging quality (100 lp/mm) simulation results in different fields of view are shown. It can be learned from the figure that image quality in a short-focus position is greater than 0.5 in a T direction and an S direction.

FIG. 9 is a diagram of optical distortion of an optical imaging system according to an embodiment, where a distortion curve in the diagram of optical distortion represents a difference between imaging deformation and an ideal shape in this embodiment, a horizontal coordinate is a distortion value, and a vertical coordinate is a field of view.

It can be learned from the figure that, distortion of the optical imaging system in this embodiment in a long-focus position is within a range of 3%.

**Third embodiment**

Refer to FIG. 10. An optical imaging system 10 in the first embodiment sequentially includes a first lens L1, a second lens L2, a third lens L3, a fourth lens L4, a fifth lens L5, a sixth lens L6, a seventh lens L7, a light filter IR, and an image plane IMG from an object side to an image side.

The optical imaging system shown in FIG. 10 includes seven lenses. A first group G1 includes the first lens L1, the second lens L2, the third lens L3, the fourth lens L4, and the fifth lens L5. A second group G2 includes the sixth lens L6 and the seventh lens L7.

In this embodiment, the first lens L1 has a positive focal power, the second lens has a negative focal power, an object side surface of the second lens is a convex surface, the third lens has a negative focal power, the fourth lens has a negative focal power, the fifth lens has a positive focal power, the sixth lens has a positive focal power, and the seventh lens has a negative focal power.

The optical imaging system in this embodiment meets the following relational expression:

$$ImgH/TTL=0.946;$$

$$|f1/f|=0.946;$$

$$|f2/f|=2.746;$$

$$|f3/f|=4.292;$$

$$|f4/f|=-15.568;$$

$$|f5/f|=1.136;$$

$$|f6/f|=4.381;$$

$$|f7/f|=0.505;$$

and

$$TTL0/TTL=0.68.$$

Table 7 shows optical parameters of the optical imaging system 10 provided in this embodiment.

**Table 7**

| Optical parameters | |
|---|---|
| f | 10.17 mm |

(continued)

| Optical parameters | |
|---|---|
| FNO | 2.16 |
| ImgH | 8.11 mm |
| TTL | 11.6 mm |
| Design wavelengths | 650 nm, 610 nm, 555 nm, 510 nm, and 470 nm |

Table 8 shows basic parameters of lenses of the optical imaging system 10. R is a curvature radius of an optical surface, d is a thickness of a lens, Nd is a refractive index of a material, Vd is an Abbe number of the material, VD is an effective radius, and inf represents infinity.

**Table 8**

| Lens number | Surface | R (mm) | d (mm) | Vd | Nd | VD (mm) |
|---|---|---|---|---|---|---|
| L1 | Object side surface | 3.673 | 1.188 | 2.365 | 1.545 | 56.135 |
| | Image side surface | 10.249 | 0.113 | 2.164 | | |
| L2 | Object side surface | 8.114 | 0.358 | 2.114 | 1.677 | 19.245 |
| | Image side surface | 6.182 | 0.698 | 1.991 | | |
| L3 | Object side surface | -9.791 | 0.572 | 1.985 | 1.677 | 19.245 |
| | Image side surface | -34.374 | 0.476 | 2.295 | | |
| L4 | Object side surface | -26.833 | 0.986 | 2.846 | 1.545 | 56.135 |
| | Image side surface | -5.956 | 0.305 | 3.037 | | |
| L5 | Object side surface | -23.735 | 0.545 | 3.578 | 1.545 | 56.135 |
| | Image side surface | -30.692 | 3.257 | 3.966 | | |
| L6 | Object side surface | -9.302 | 0.899 | 5.425 | 1.545 | 56.135 |
| | Image side surface | -19.271 | 0.350 | 6.447 | | |
| L7 | Object side surface | -18.832 | 0.600 | 6.710 | 1.644 | 23.528 |
| | Image side surface | -46.563 | 0.797 | 7.569 | | |
| IR | Object side surface | Inf | 0.300 | 8.582 | 1.545 | 56.135 |
| | Image side surface | Inf | 0.158 | 8.706 | | |

Table 9 shows aspheric coefficients of lenses.

**Table 9**

| Surface | Surface type | K | A4 | A6 | A8 | A10 |
|---|---|---|---|---|---|---|
| L1 object side surface | QBSF | 0 | -0.13566823 | 0.046911059 | -0.01869598 9 | 0.006993475 |
| L1 image side surface | QBSF | 0 | -0.15829297 3 | 0.0539355 | -0.02072572 4 | 0.007271854 |
| L2 object side surface | QBSF | 0 | -0.02426779 2 | 0.008108181 | -0.00350296 4 | 0.000729851 |

(continued)

| Surface | Surface type | K | A4 | A6 | A8 | A10 |
|---|---|---|---|---|---|---|
| L2 image side surface | QBSF | 0 | 0.059900511 | -0.01531618 7 | 0.002337085 | -0.00028939 5 |
| L3 object side surface | QBSF | 0 | 0.137472369 | 0.012065871 | -0.00439007 2 | 0.00056711 |
| L3 image side surface | QBSF | 0 | -0.13096252 3 | 0.1085302 | -0.02289693 6 | 0.001544893 |
| L4 object side surface | QBSF | 0 | -0.10336977 9 | 0.062419571 | 0.014503106 | -0.01396431 4 |
| L4 image side surface | QBSF | 0 | 0.168804352 | 0.145296429 | 0.010583993 | -0.00198222 6 |
| L5 object side surface | QBSF | 0 | 1.230918501 | 0.154247122 | 0.008958641 | -0.02678768 5 |
| L5 image side surface | QBSF | 0 | 0.925014836 | 0.053330596 | 0.042020714 | -0.06607502 |
| L6 object side surface | QBSF | 0 | -0.20547915 6 | 0.792553392 | 0.180147519 | 0.00104522 |
| L6 image side surface | QBSF | -8.55023147 8 | 1.012674361 | 1.183557468 | -0.58518451 5 | 0.366906911 |
| L7 object side surface | QBSF | -7.04117794 5 | 1.48717883 | 0.065220435 | -0.24256956 3 | 0.231212813 |
| L7 image side surface | QBSF | 0 | 3.136980768 | -0.22195748 4 | 0.387860334 | 0.065289113 |
| Surface | A12 | A14 | A16 | A18 | A20 | A22 |
| L1 object side surface | -0.00255665 | 0.000898478 | -0.00030052 2 | 0.000113564 | -3.46144E-0 5 | 0 |
| L1 image side surface | -0.00294745 6 | 0.001029576 | -0.00039591 6 | 0.000100335 | -3.09863E-0 5 | 3.53233E-05 |
| L2 object side surface | -0.00075965 | 0.000291763 | -0.00013835 2 | 2.1094E-05 | -2.14949E-0 5 | 2.87331E-05 |
| L2 image side surface | -0.00035995 2 | 0.00023188 | -0.00011417 5 | 3.49614E-05 | -3.19579E-0 5 | 4.60167E-05 |

(continued)

| Surface | A12 | A14 | A16 | A18 | A20 | A22 |
|---|---|---|---|---|---|---|
| L3 object side surface | -0.00031750 9 | 0.000272175 | -0.00015588 3 | 0.000116668 | -9.6721E-05 | 7.22713E-05 |
| L3 image side surface | -0.00036254 9 | 0.0002595 | 0.000196391 | -0.00020256 6 | 0.000148479 | -5.33421E-0 5 |
| L4 object side surface | 0.003264604 | -0.00216968 | 0.003383442 | -0.00160689 9 | 0.000666601 | -0.00014765 1 |
| L4 image side surface | 0.018725861 | -0.00873279 | 0.009208961 | -0.00488475 5 | 0.003086441 | -0.00136739 3 |
| L5 object side surface | 0.035042731 | -0.02229273 3 | 0.018351398 | -0.00712464 5 | 0.004143118 | -0.00208912 4 |
| L5 image side surface | 0.013959711 | -0.01791249 8 | 0.009185562 | -0.00494760 8 | 0.003798475 | -0.00238725 3 |
| L6 object side surface | -0.02334369 6 | -0.02909165 9 | -0.01612865 6 | -0.01024350 8 | -0.01221393 9 | -0.00925971 8 |
| L6 image side surface | -0.10604191 4 | -0.01738556 9 | -0.03852810 7 | -0.04103633 3 | -0.02304777 6 | -0.00723487 8 |
| L7 object side surface | -0.06401500 5 | 0.131523955 | -0.02266636 7 | 0.082673743 | 0.03743044 | 0.018410841 |
| L7 image side surface | 0.181883382 | 0.117231487 | 0.055194379 | 0.17958672 | 0.063911014 | 0.066836197 |
| Surface | A24 | A26 | A28 | A30 | | |
| L1 object side surface | 0 | 0 | 0 | 0 | | |
| L1 image side surface | 0 | 0 | 0 | 0 | | |
| L2 object side surface | 0 | 0 | 0 | 0 | | |
| L2 image side surface | -2.79192E-0 7 | 0 | 0 | 0 | | |
| L3 object side surface | -4.36873E-0 5 | 1.74353E-06 | 0 | 0 | | |

(continued)

| Surface | A24 | A26 | A28 | A30 | | |
|---|---|---|---|---|---|---|
| L3 image side surface | 1.94207E-05 | 2.35227E-05 | -3.24459E-0 5 | 4.04385E-05 | | |
| L4 object side surface | 1.11872E-05 | 2.59376E-05 | 0 | 0 | | |
| L4 image side surface | 0.000631222 | -0.00013255 7 | 7.2088E-05 | 3.22074E-05 | | |
| L5 object side surface | 0.000644216 | 0.000487625 | -0.00035226 | 0.000182018 | | |
| L5 image side surface | 0.000133276 | 0.000535924 | -0.00019364 5 | 7.94139E-05 | | |
| L6 object side surface | -0.00053758 6 | -0.00416812 9 | -0.00544524 | 0.004410126 | | |
| L6 image side surface | -0.03378071 5 | -0.03357072 8 | -0.00891450 9 | -0.00963044 | | |
| L7 object side surface | 0.037235512 | -0.01650642 9 | 0.006542954 | -0.00917946 5 | | |
| L7 image side surface | 0.077342035 | 0.043056527 | 0.02560637 | 0.008002436 | | |

In this embodiment, all QBSF-type aspheric surface types z of the optical imaging system 10 may be limited by using, but not limited to, the following aspheric formula:

$$z=\frac{cr^2}{1+\sqrt{1-(K+1)c^2r^2}}+\frac{u^2(1-u^2)\sqrt{1-Kc^2r^2}}{\sqrt{1-(K+1)c^1r^2}}\sum_{m=0}^{13}a_mQ_M^{bfs}(u^2).$$

Herein, z is a vector height of an aspheric surface, r is radial coordinates of the aspheric surface, c is a spherical curvature of a vertex of the aspheric surface, K is a quadratic surface constant, and A4, A6, ..., and A30 are aspheric coefficients, and correspond to $a_1$, ..., and $a_{13}$ respectively.

FIG. 11 is a defocus curve diagram of the optical imaging system 10 according to this embodiment. As shown in FIG. 11, imaging quality (100 lp/mm) simulation results in different fields of view are shown. It can be learned from the figure that image quality in a short-focus position is greater than 0.5 in a T direction and an S direction.

FIG. 12 is a diagram of optical distortion of an optical imaging system according to an embodiment, where a distortion curve in the diagram of optical distortion represents a difference between imaging deformation and an ideal shape in this embodiment, a horizontal coordinate is a distortion value, and a vertical coordinate is a field of view.

It can be learned from the figure that, distortion of the optical imaging system in this embodiment in a long-focus position is within a range of 3%.

**Fourth embodiment**

Refer to FIG. 13. An optical imaging system 10 in the first embodiment sequentially includes a first lens L1, a second lens L2, a third lens L3, a fourth lens L4, a fifth lens L5, a sixth lens L6, a seventh lens L7, a light filter IR, and an image plane IMG from an object side to an image side.

The optical imaging system shown in FIG. 13 includes seven lenses. A first group G1 includes the first lens L1, the second lens L2, the third lens L3, the fourth lens L4, and the fifth lens L5. A second group G2 includes the sixth lens L6 and the seventh lens L7.

In this embodiment, the first lens L1 has a positive focal power, the second lens L2 has a negative focal power, an object side surface of the second lens is a convex surface, the third lens has a negative focal power, the fourth lens has a negative focal power, the fifth lens has a positive focal power, the sixth lens has a negative focal power, and the seventh lens has a negative focal power.

The optical imaging system in this embodiment meets the following relational expression:

$$ImgH/TTL=0.726;$$

$$|f1/f|=0.958;$$

$$|f2/f|=2.62;$$

$$|f3/f|=4.434;$$

$$|f4/f|=-38.191;$$

$$|f5/f|=1.261;$$

$$|f6/f|=3.751;$$

$$|f7/f|=1.383;$$

and

$$TTL0/TTL=0.768.$$

Table 10 shows optical parameters of the optical imaging system 10 provided in this embodiment.

**Table 10**

| Optical parameters | |
|---|---|
| f | 9.20 mm |
| FNO | 2.19 |
| ImgH | 8.10 mm |
| TTL | 11.15 mm |
| Design wavelengths | 650 nm, 610 nm, 555 nm, 510 nm, and 470 nm |

Table 11 shows basic parameters of lenses of the optical imaging system 10. R is a curvature radius of an optical surface, d is a thickness of a lens, Nd is a refractive index of a material, Vd is an Abbe number of the material, VD is an effective radius, and inf represents infinity.

**Table 11**

| Lens number | Surface | R (mm) | D (mm) | D | Nd | VD (mm) |
|---|---|---|---|---|---|---|
| L1 | Object side surface | 3.389 | 1.074 | 2.131 | 1.545 | 56.135 |
| | Image side surface | 9.899 | 0.075 | 1.946 | | |
| L2 | Object side surface | 8.457 | 0.300 | 1.915 | 1.677 | 19.245 |
| | Image side surface | 6.159 | 0.634 | 1.810 | | |
| L3 | Object side surface | -8.607 | 0.508 | 1.805 | 1.677 | 19.245 |
| | Image side surface | -35.707 | 0.435 | 2.159 | | |
| L4 | Object side surface | -23.123 | 0.934 | 2.609 | 1.545 | 56.135 |
| | Image side surface | -5.426 | 0.257 | 2.761 | | |
| L5 | Object side surface | -12.870 | 0.551 | 3.175 | 1.545 | 56.135 |
| | Image side surface | -14.258 | 3.006 | 3.514 | | |
| L6 | Object side surface | -8.388 | 0.951 | 4.910 | 1.545 | 56.135 |
| | Image side surface | -15.415 | 0.189 | 5.833 | | |
| L7 | Object side surface | -16.622 | 0.804 | 5.886 | 1.644 | 23.528 |
| | Image side surface | -41.152 | 0.785 | 6.965 | | |
| IR | Object side surface | Inf | 0.425 | 7.778 | 1.545 | 56.135 |
| | Image side surface | Inf | 0.232 | 7.940 | | |

Table 12 shows aspheric coefficients of lenses.

**Table 12**

| Surface | Surface type | K | A4 | A6 | A8 | A10 |
|---|---|---|---|---|---|---|
| L1 object side surface | QBSF | 0 | -0.11958145 4 | 0.039781068 | -0.01545960 9 | 0.005569606 |
| L1 image side surface | QBSF | 0 | 0 | -0.13382653 7 | 0.045696554 | -0.01653292 4 |
| L2 object side surface | QBSF | 0 | -0.02545850 4 | 0.008428698 | -0.00362419 6 | 0.000974814 |
| L2 image side surface | QBSF | 0 | 0.054858598 | -0.01423956 5 | 0.001788743 | 7.21165E-05 |
| L3 object side surface | QBSF | 0 | 0.124781516 | 0.011009186 | -0.00415397 2 | 0.000813331 |
| L3 image side surface | QBSF | 0 | -0.21653060 2 | 0.137931077 | -0.02940602 4 | 0.002528788 |
| L4 object side surface | QBSF | 0 | -0.08655893 2 | 0.04135298 | 0.02927222 | -0.02481787 4 |

(continued)

| Surface | Surface type | K | A4 | A6 | A8 | A10 |
|---|---|---|---|---|---|---|
| L4 image side surface | QBSF | 0 | 0.156740922 | 0.130978242 | -0.00243169 9 | 0.005591977 |
| L5 object side surface | QBSF | 0 | 1.040303616 | 0.150195718 | -0.01052443 7 | -0.00432688 5 |
| L5 image side surface | QBSF | 0 | 0.811656847 | 0.06512504 | 0.017325586 | -0.04361559 8 |
| L6 object side surface | QBSF | 0 | 0.022745534 | 0.73712468 | -0.05154077 1 | -0.03236686 7 |
| L6 image side surface | QBSF | -4.66985853 8 | 1.432889392 | 0.920417899 | -0.63601835 4 | 0.358054683 |
| L7 object side surface | QBSF | 0.60049887 | 1.98857622 | 0.122478625 | 0.060570418 | 0.127908088 |
| L7 image side surface | QBSF | 0 | 3.447762879 | 0.027051687 | 0.330033632 | 0.139794006 |
| Surface | A12 | A14 | A16 | A18 | A20 | A22 |
| L1 object side surface | -0.001966993 | 0.000648838 | -0.00016472 2 | 1.40534E-0 5 | 3.17058E-0 6 | -1.29638E-07 |
| L1 image side surface | 0.005475368 | -0.00226642 6 | 0.00049007 | 3.54289E-0 6 | -0.00014052 3 | 0.000127823 |
| L2 object side surface | -0.00098466 | 0.000141571 | 3.16671E-0 5 | -7.72004E-05 | 6.51483E-0 5 | 3.01741E-0 6 |
| L2 image side surface | -0.000547761 | 0.000262025 | -0.00010625 8 | 2.17219E-0 5 | 2.87365E-0 5 | 1.64469E-0 6 |
| L3 object side surface | -0.000399162 | 0.000206132 | -9.45001E-05 | 5.75361E-0 5 | -2.93974E-05 | -8.98121E-07 |
| L3 image side surface | -0.000619565 | 0.000300378 | 1.58925E-0 7 | 0 | 0 | 0 |
| L4 object side surface | 0.010652399 | -0.00725761 8 | 0.005906384 | -0.00317906 5 | 0.001585322 | -0.00070496 5 |
| L4 image side surface | 0.00835357 | -0.00304357 2 | 0.004155255 | -0.00222171 4 | 0.001481473 | -0.00075144 8 |

(continued)

| Surface | A12 | A14 | A16 | A18 | A20 | A22 |
|---|---|---|---|---|---|---|
| L5 object side surface | 0.014603973 | -0.00931737 2 | 0.009250943 | -0.00413218 6 | 0.002432958 | -0.00133130 9 |
| L5 image side surface | 0.010324697 | -0.01291326 6 | 0.007657827 | -0.00554329 9 | 0.004083441 | -0.00328447 3 |
| L6 object side surface | 0.030877109 | -0.04069575 9 | -0.00158103 8 | -0.00321583 8 | 0.002397295 | -0.00571858 |
| L6 image side surface | -0.136569313 | 0.002267744 | -0.04112054 3 | 0.009290589 | -0.02066405 8 | 0.012052658 |
| L7 object side surface | 0.01233475 | 0.072642779 | -0.02736300 6 | 0.039557193 | -0.01085323 3 | 0.020438114 |
| L7 image side surface | 0.11654649 | 0.095604365 | 0.026335584 | 0.040475926 | 0.011902281 | 0.020765468 |
| Surface | A24 | A26 | A28 | A30 | | |
| L1 object side surface | 0 | 0 | 0 | 0 | | |
| L1 image side surface | -2.72277E-05 | 0 | 0 | 0 | | |
| L2 object side surface | 0 | 0 | 0 | 0 | | |
| L2 image side surface | -3.4763E-06 | 0 | 0 | 0 | | |
| L3 object side surface | 5.47929E-06 | -1.13567E-06 | 0 | 0 | | |
| L3 image side surface | 0 | 0 | 0 | 0 | | |
| L4 object side surface | 0.000247397 | -2.81772E-05 | 0 | 0 | | |
| L4 image side surface | 0.000493402 | -0.00032506 4 | 0.000208852 | -0.00012090 1 | | |
| L5 object side surface | 0.001015412 | -0.00067090 6 | 0.000415999 | -0.00025128 7 | | |

(continued)

| Surface | A24 | A26 | A28 | A30 | | |
|---|---|---|---|---|---|---|
| L5 image side surface | 0.002375555 | -0.00160832 9 | 0.000938798 | -0.00041614 | | |
| L6 object side surface | 0.00428529 | -0.00252411 5 | 0.00126203 | -0.00045565 3 | | |
| L6 image side surface | -0.000840653 | 0.00854895 | -0.00698184 1 | 0.000592843 | | |
| L7 object side surface | 0.004017003 | 0.00723179 | -0.00580721 9 | -0.00124735 4 | | |
| L7 image side surface | 0.005900519 | 0.011869937 | 0.001594979 | 0.002477324 | | |

In this embodiment, all QBSF-type aspheric surface types z of the optical imaging system 10 may be limited by using, but not limited to, the following aspheric formula:

$$z = \frac{cr^2}{1+\sqrt{1-(K+1)c^2r^2}} + \frac{u^2(1-u^2)\sqrt{1-Kc^2r^2}}{\sqrt{1-(K+1)c^1r^2}} \sum_{m=0}^{13} a_m Q_M^{bfs}(u^2).$$

Herein, z is a vector height of an aspheric surface, r is radial coordinates of the aspheric surface, c is a spherical curvature of a vertex of the aspheric surface, K is a quadratic surface constant, and A4, A6, ..., and A30 are aspheric coefficients, and correspond to $a_1$, ..., and $a_{13}$ respectively.

FIG. 14 is a defocus curve diagram of the optical imaging system 10 according to this embodiment. As shown in FIG. 14, imaging quality (100 lp/mm) simulation results in different fields of view are shown. It can be learned from the figure that image quality in a short-focus position is greater than 0.5 in a T direction and an S direction.

FIG. 15 is a diagram of optical distortion of an optical imaging system according to an embodiment, where a distortion curve in the diagram of optical distortion represents a difference between imaging deformation and an ideal shape in this embodiment, a horizontal coordinate is a distortion value, and a vertical coordinate is a field of view.

It can be learned from the figure that, distortion of the optical imaging system in this embodiment in a long-focus position is within a range of 3%.

**Fifth embodiment**

Refer to FIG. 16. An optical imaging system 10 in the first embodiment sequentially includes a first lens L1, a second lens L2, a third lens L3, a fourth lens L4, a fifth lens L5, a sixth lens L6, a seventh lens L7, a light filter IR, and an image plane IMG from an object side to an image side.

The optical imaging system shown in FIG. 16 includes seven lenses. A first group G1 includes the first lens L1, the second lens L2, the third lens L3, the fourth lens L4, and the fifth lens L5. A second group G2 includes the sixth lens L6 and the seventh lens L7.

In this embodiment, the first lens L1 has a positive focal power, the second lens has a negative focal power, an object side surface of the second lens is a convex surface, the third lens has a negative focal power, the fourth lens has a negative focal power, the fifth lens has a positive focal power, the sixth lens has a negative focal power, and the seventh lens has a negative focal power.

The optical imaging system in this embodiment meets the following relational expression:

$$ImgH/TTL=0.78;$$

$$|f1/f|=0.910;$$

$$|f2/f|=2.458;$$

$$|f3/f|=4.03;$$

$$|f4/f|=-20.007;$$

$$|f5/f|=1.145;$$

$$|f6/f|=3.654;$$

$$|f7/f|=0.539;$$

and

$$TTL0/TTL=0.711.$$

Table 13 shows optical parameters of the optical imaging system 10 provided in this embodiment.

**Table 13**

| Optical parameters | |
|---|---|
| f | 9.20 mm |
| FNO | 2.2 |
| ImgH | 8.11 mm |
| TTL | 10.4 mm |
| Design wavelengths | 650 nm, 610 nm, 555 nm, 510 nm, and 470 nm |

Table 14 shows basic parameters of lenses of the optical imaging system 10. R is a curvature radius of an optical surface, d is a thickness of a lens, Nd is a refractive index of a material, Vd is an Abbe number of the material, VD is an effective radius, and inf represents infinity.

**Table 14**

| Lens number | Surface | R (mm) | D (mm) | | Vd | Nd | VD (mm) |
|---|---|---|---|---|---|---|---|
| L1 | Object side surface | 3.256 | 1.078 | | 2.120 | 1.545 | 56.135 |
| | Image side surface | 9.526 | 0.030 | | 1.935 | | |
| L2 | Object side surface | 8.266 | 0.300 | | 1.915 | 1.677 | 19.245 |
| | Image side surface | 5.958 | 0.628 | | 1.801 | | |
| L3 | Object | -8.001 | 0.539 | | 1.796 | 1.677 | 19.245 |
| | side surface | | | | | | |
| | Image side surface | -35.142 | 0.440 | | 2.130 | | |

(continued)

| Lens number | Surface | R (mm) | D (mm) | | Vd | Nd | VD (mm) |
|---|---|---|---|---|---|---|---|
| L4 | Object side surface | -23.786 | 0.939 | | 2.579 | 1.545 | 56.135 |
| | Image side surface | -5.282 | 0.266 | | 2.748 | | |
| L5 | Object side surface | -67.269 | 0.480 | | 3.267 | 1.545 | 56.135 |
| | Image side surface | -120.702 | 3.000 | | 3.618 | | |
| L6 | Object side surface | -7.363 | 0.547 | | 4.774 | 1.545 | 56.135 |
| | Image side surface | -13.232 | 0.751 | | 5.645 | | |
| L7 | Object side surface | -10.614 | 0.600 | | 5.662 | 1.644 | 23.528 |
| | Image side surface | -13.251 | 0.461 | | 6.413 | | |
| IR | Object side surface | Inf | 0.300 | | 7.893 | 1.545 | 56.135 |
| | Image side surface | Inf | 0.088 | | 8.029 | | |

Table 15 shows aspheric coefficients of lenses.

**Table 15**

| Surface | Surface type | K | A4 | A6 | A8 | A10 |
|---|---|---|---|---|---|---|
| L1 object side surface | QBSF | 0 | -0.12120250 4 | 0.040112255 | -0.01561217 6 | 0.005635187 |
| L1 image side surface | QBSF | 0 | -0.13372220 9 | 0.045025963 | -0.01493782 7 | 0.003066468 |
| L2 object side surface | QBSF | 0 | -0.02242990 2 | 0.007344832 | -0.00216678 1 | -0.00098405 6 |
| L2 image side surface | QBSF | 0 | 0.054342342 | -0.01409383 1 | 0.00176058 | 7.3497E-05 |
| L3 object side surface | QBSF | 0 | 0.1281682 | 0.012164391 | -0.00411566 6 | 0.00086185 |
| L3 image side surface | QBSF | 0 | -0.22761922 1 | 0.140384284 | -0.02923207 2 | 0.0026414 |
| L4 object side surface | QBSF | 0 | -0.09031656 8 | 0.049251214 | 0.03149897 | -0.02946850 8 |
| L4 image side surface | QBSF | 0 | 0.165909074 | 0.13154914 | -0.00782035 8 | 0.009045983 |
| L5 object side surface | QBSF | 0 | 1.096907619 | 0.13600001 | -0.00248311 | 0.002180206 |
| L5 image side surface | QBSF | 0 | 0.714595263 | 0.118719793 | 0.04096095 | -0.05530036 1 |

(continued)

| Surface | Surface type | K | A4 | A6 | A8 | A10 |
|---|---|---|---|---|---|---|
| L6 object side surface | QBSF | 0 | -0.43701977 7 | 0.891002348 | 0.511447495 | 0.093006364 |
| L6 image side surface | QBSF | -10.5050804 1 | 0.678825805 | 1.101110169 | 0.066888865 | 0.167459911 |
| L7 object side surface | QBSF | 0.917699876 | 1.388028668 | -0.10706762 1 | -0.39487664 8 | -0.43553745 4 |
| L7 image side surface | QBSF | 0 | 2.891976152 | 0.021781425 | -0.27963338 | -0.36131664 8 |
| Surface | A12 | A14 | A16 | A18 | A20 | A22 |
| L1 object side surface | -0.00194619 3 | 0.000620502 | -0.00015741 5 | 5.83757E-06 | 3.06337E-06 | -1.42741E-0 7 |
| L1 image side surface | -0.00100764 1 | -0.00063230 4 | 0.000523165 | -0.00038564 9 | 0.000239971 | 5.32447E-06 |
| L2 object side surface | -5.8826E-05 | -0.00062601 | 0.000395312 | -0.00027922 3 | 0.000190022 | 3.00232E-06 |
| L2 image side surface | -0.00054398 9 | 0.00025973 | -0.0001053 | 2.1515E-05 | 2.85425E-05 | 1.69395E-06 |
| L3 object side surface | -0.00055348 9 | 0.000332078 | -0.00014287 4 | 5.68016E-05 | -1.82621E-0 5 | -8.93631E-0 7 |
| L3 image side surface | -0.00090928 8 | 0.000420359 | 2.25563E-07 | 0 | 0 | 0 |
| L4 object side surface | 0.011746572 | -0.00609796 5 | 0.002967622 | 0.000121003 | -0.00057193 | 0.000254701 |
| L4 image side surface | 0.01231137 | -0.00701658 4 | 0.008955195 | -0.00436718 4 | 0.002340516 | -0.00053932 3 |
| L5 object side surface | 0.005723746 | -0.00226824 5 | 0.009443975 | -0.00293186 7 | 0.001669819 | -0.00072360 7 |
| L5 image side surface | 0.00632499 | -0.01375679 3 | 0.008180967 | -0.00276363 9 | 0.001970223 | -0.00206481 5 |
| L6 object side surface | -0.05652369 | -0.05331545 1 | -0.03535801 5 | -0.01830138 9 | 0.010987336 | 0.005774011 |

(continued)

| Surface | A12 | A14 | A16 | A18 | A20 | A22 |
|---|---|---|---|---|---|---|
| L6 image side surface | -0.10552611 8 | 0.13475904 | -0.15308470 5 | 0.10683851 | -0.04497627 5 | 0.036159676 |
| L7 object side surface | -0.10141969 6 | 0.101266696 | -0.09571037 8 | 0.140789668 | 0.13648068 | 0.00915981 |
| L7 image side surface | 0.210647293 | -0.03395550 9 | 0.012744972 | 0.156517966 | 0.114685122 | 0.03921873 |
| Surface | A24 | A26 | A28 | A30 | | |
| L1 object side surface | 0 | 0 | 0 | 0 | | |
| L1 image side surface | 0 | 0 | 0 | 0 | | |
| L2 object side surface | 0 | 0 | 0 | 0 | | |
| L2 image side surface | -3.48281E-0 6 | 0 | 0 | 0 | | |
| L3 object side surface | 5.4519E-06 | -1.12999E-0 6 | 0 | 0 | | |
| L3 image side surface | 0 | 0 | 0 | 0 | | |
| L4 object side surface | -3.74972E-0 5 | 9.09149E-06 | 0 | 0 | | |
| L4 image side surface | 0.000103713 | 0.000187832 | -0.00011828 5 | 0.000100901 | | |
| L5 object side surface | 0.001057527 | -0.00059701 7 | 0.000402171 | -8.47027E-0 5 | | |
| L5 image side surface | 0.000820812 | 4.89729E-05 | -0.00022891 3 | 0.000167417 | | |
| L6 object side surface | 0.016602989 | 0.001750428 | -0.00045863 4 | 0.000364378 | | |
| L6 image side surface | -0.01468795 3 | 0.019082975 | 0.00183639 | 0.018784663 | | |

(continued)

| Surface | A24 | A26 | A28 | A30 | | |
|---|---|---|---|---|---|---|
| L7 object side surface | 0.04986008 | 0.054520648 | -0.00322014 4 | 0.033955894 | | |
| L7 image side surface | 0.082153448 | 0.072285874 | 0.010087447 | 0.044719216 | | |

In this embodiment, all QBSF-type aspheric surface types z of the optical imaging system 10 may be limited by using, but not limited to, the following aspheric formula:

$$z = \frac{cr^2}{1+\sqrt{1-(K+1)c^2r^2}} + \frac{u^2(1-u^2)\sqrt{1-Kc^2r^2}}{\sqrt{1-(K+1)c^1r^2}} \sum_{m=0}^{13} a_m Q_M^{bfs}(u^2).$$

Herein, z is a vector height of an aspheric surface, r is radial coordinates of the aspheric surface, c is a spherical curvature of a vertex of the aspheric surface, K is a quadratic surface constant, and A4, A6, ..., and A30 are aspheric coefficients, and correspond to $a_1$, ..., and $a_{13}$ respectively.

FIG. 17 is a defocus curve diagram of the optical imaging system 10 according to this embodiment. As shown in FIG. 17, imaging quality (100 lp/mm) simulation results in different fields of view are shown. It can be learned from the figure that image quality in a short-focus position is greater than 0.5 in a T direction and an S direction.

FIG. 18 is a diagram of optical distortion of an optical imaging system according to an embodiment, where a distortion curve in the diagram of optical distortion represents a difference between imaging deformation and an ideal shape in this embodiment, a horizontal coordinate is a distortion value, and a vertical coordinate is a field of view.

It can be learned from the figure that, distortion of the optical imaging system in this embodiment in a long-focus position is within a range of 3%.

**Sixth embodiment**

Refer to FIG. 19. An optical imaging system 10 in the first embodiment sequentially includes a first lens L1, a second lens L2, a third lens L3, a fourth lens L4, a fifth lens L5, a sixth lens L6, a seventh lens L7, a light filter IR, and an image plane IMG from an object side to an image side.

The optical imaging system shown in FIG. 19 includes seven lenses. A first group G1 includes the first lens L1, the second lens L2, the third lens L3, the fourth lens L4, and the fifth lens L5. A second group G2 includes the sixth lens L6 and the seventh lens L7.

In this embodiment, the first lens L1 has a positive focal power, the second lens has a negative focal power, an object side surface of the second lens is a convex surface, the third lens has a negative focal power, the fourth lens has a negative focal power, the fifth lens has a positive focal power, the sixth lens has a positive focal power, and the seventh lens has a negative focal power.

The optical imaging system in this embodiment meets the following relational expression:

$$ImgH/TTL=0.727;$$

$$|f1/f|=1.136;$$

$$|f2/f|=3.378;$$

$$|f3/f|=7.68;$$

$$|f4/f|=-2.35;$$

$$|f5/f|=0.97;$$

$$|f6/f|=5.6;$$

$$|f7/f|=1.22;$$

and

$$TTL0/TTL=0.701.$$

Table 16 shows optical parameters of the optical imaging system 10 provided in this embodiment.

**Table 16**

| Optical parameters | |
|---|---|
| f | 8.85 mm |
| FNO | 1.5 |
| ImgH | 8.11 mm |
| TTL | 11.15 mm |
| Design wavelengths | 650 nm, 610 nm, 555 nm, 510 nm, and 470 nm |

Table 17 shows basic parameters of lenses of the optical imaging system 10. R is a curvature radius of an optical surface, d is a thickness of a lens, Nd is a refractive index of a material, Vd is an Abbe number of the material, VD is an effective radius, and inf represents infinity.

**Table 17**

| Lens number | Surface | R (mm) | D (mm) | Vd | Nd | VD (mm) |
|---|---|---|---|---|---|---|
| L1 | Object side surface | 4.003 | 1.483 | 2.897 | 1.545 | 56.135 |
| | Image side surface | 10.000 | 0.222 | 2.631 | | |
| L2 | Object side surface | 7.905 | 0.400 | 2.554 | 1.677 | 19.245 |
| | Image side surface | 6.201 | 0.867 | 2.392 | | |
| L3 | Object side surface | -10.463 | 0.666 | 2.356 | 1.677 | 19.245 |
| | Image side surface | -32.531 | 0.545 | 2.318 | | |
| L4 | Object side surface | -32.174 | 0.300 | 3.246 | 1.545 | 56.135 |
| | Image side surface | -8.665 | 0.287 | 3.164 | | |
| L5 | Object side surface | -32.942 | 0.661 | 3.814 | 1.545 | 56.135 |
| | Image side surface | -16.773 | 3.294 | 4.095 | | |
| L6 | Object side surface | -17.475 | 0.554 | 6.608 | 1.545 | 56.135 |
| | Image side surface | -12.096 | 0.132 | 6.680 | | |
| L7 | Object side surface | -34.441 | 0.538 | 7.161 | 1.644 | 23.528 |
| | Image side surface | 144.820 | 0.883 | 7.690 | | |

(continued)

| Lens number | Surface | R (mm) | D (mm) | Vd | Nd | VD (mm) |
|---|---|---|---|---|---|---|
| IR | Object side surface | inf | 0.210 | 10.523 | 1.545 | 56.135 |
| | Image side surface | inf | 0.087 | 10.523 | | |

Table 18 shows aspheric coefficients of lenses.

**Table 18**

| Surface | Surface type | K | A4 | A6 | A8 | A10 |
|---|---|---|---|---|---|---|
| L1 object side surface | QBSF | 0 | -0.23897374 7 | 0.090491823 | -0.04329508 4 | 0.019823284 |
| L1 image side surface | QBSF | 0 | -0.30987363 9 | 0.119935986 | -0.06018545 5 | 0.031150033 |
| L2 object side surface | QBSF | 0 | -0.09843538 4 | 0.066247005 | -0.02635852 8 | 0.014153126 |
| L2 image side surface | QBSF | 0 | - 0.008371745 | 0.051591026 | -0.03229462 | 0.019232191 |
| L3 object side surface | QBSF | 0 | 0.131592706 | 0.040136533 | -0.01890026 7 | 0.00637785 |
| L3 image side surface | QBSF | 0 | -0.00725955 4 | 0.046873682 | -0.01303917 7 | 0.000896945 |
| L4 object side surface | QBSF | 0 | -0.12006603 6 | -0.01838197 5 | 0.061062542 | -0.04840819 5 |
| L4 image side surface | QBSF | 0 | 0.110666721 | 0.155219397 | 0.067014793 | -0.04368565 9 |
| L5 object side surface | QBSF | 0 | 1.096829867 | 0.39098969 | -0.14782449 5 | 0.06705914 |
| L5 image side surface | QBSF | 0 | 0.488360019 | 0.297183011 | -0.06422679 2 | -0.03749127 4 |
| L6 object side surface | QBSF | 0 | -1.36963798 8 | 0.807583135 | 1.210374645 | 0.211916794 |
| L6 image side surface | QBSF | 0 | 1.631556862 | 1.545409779 | 0.098251959 | -0.30725337 2 |
| L7 object side surface | QBSF | 0 | 1.580105359 | -0.15486342 6 | 0.839811146 | -0.08366221 7 |

(continued)

| Surface | Surface type | K | A4 | A6 | A8 | A10 |
|---|---|---|---|---|---|---|
| L7 image side surface | QBSF | 0 | 2.162185264 | 0.556801612 | 1.000504646 | -0.54046546 8 |
| Surface | A12 | A14 | A16 | A18 | A20 | A22 |
| L1 object side surface | -0.00868655 4 | 0.003471898 | -0.00123961 9 | 0.000332363 | -3.53281E-0 7 | -7.52605E-0 5 |
| L1 image side surface | -0.01416318 9 | 0.006774068 | -0.00296722 8 | 0.001060124 | -0.00023513 | -1.1489E-05 |
| L2 object side surface | -0.00355573 8 | 0.00146022 | -0.00041934 3 | -0.00019602 3 | 0.000324521 | -0.00019606 2 |
| L2 image side surface | -0.00728695 3 | 0.002810712 | -0.00099258 8 | 0.000109717 | 0.000195328 | -0.00017468 3 |
| L3 object side surface | -0.00210386 7 | 0.000565536 | -0.00037766 7 | 0.00027764 | -0.00016600 4 | 5.31878E-05 |
| L3 image side surface | -0.00028409 5 | -0.00020273 5 | 6.81333E-05 | 3.78775E-05 | -6.77077E-0 5 | 0.000170639 |
| L4 object side surface | 0.027421224 | -0.03765059 7 | 0.045011859 | -0.04125148 | 0.033581658 | -0.02302291 7 |
| L4 image side surface | 0.079986581 | -0.08739811 6 | 0.099109914 | -0.07790654 | 0.054864078 | -0.03031618 3 |
| L5 object side surface | -0.03269281 7 | 0.026307759 | 0.016623435 | -0.02505232 7 | 0.022584889 | -0.01151438 |
| L5 image side surface | -0.04380403 2 | 0.039125346 | 0.000117567 | -0.01412003 9 | 0.009119939 | -0.00289173 7 |
| L6 object side surface | -0.21851634 4 | -0.16283356 | -0.15651307 4 | -0.01790592 2 | -0.01659282 6 | 0.001595615 |
| L6 image side surface | 0.189060866 | -0.12777498 1 | -0.19161175 5 | -0.07036558 9 | 0.026502228 | -0.03562757 9 |
| L7 object side surface | 0.238777647 | 0.245344945 | 0.149530564 | -0.03704790 6 | 0.195455064 | -0.04987670 7 |
| L7 image side surface | 0.84194212 | 0.131170307 | 0.059019946 | 0.110993056 | 0.115834246 | 0.011993883 |

(continued)

| Surface | A24 | A26 | A28 | A30 | | |
|---|---|---|---|---|---|---|
| L1 object side surface | 2.72667E-05 | 4.03286E-07 | 0 | 0 | | |
| L1 image side surface | 4.81583E-05 | 1.14032E-07 | 0 | 0 | | |
| L2 object side surface | 8.02009E-05 | -2.97392E-0 5 | 0 | 0 | | |
| L2 image side surface | 7.19781E-05 | 0 | 0 | 0 | | |
| L3 object side surface | 0 | 0 | 0 | 0 | | |
| L3 image side surface | -0.00014335 3 | 0.000185621 | -8.33887E-0 5 | 8.90548E-05 | | |
| L4 object side surface | 0.014568479 | -0.00744410 8 | 0.002796412 | -0.00058302 5 | | |
| L4 image side surface | 0.015910388 | -0.00726876 6 | 0.002814089 | -0.00062941 | | |
| L5 object side surface | 0.005350089 | -0.00177391 1 | 0.000575243 | 2.23598E-06 | | |
| L5 image side surface | 0.000912164 | -0.00091353 7 | 0.000451092 | 9.57988E-05 | | |
| L6 object side surface | 0.008330462 | 0.001095738 | 0.007533495 | -0.00534667 2 | | |
| L6 image side surface | 0.018593897 | 0.014256609 | -0.02842069 2 | 0.011712978 | | |
| L7 object side surface | 0.080062464 | -0.01981092 4 | 0.011075557 | -0.01496169 8 | | |
| L7 image side surface | 0.027520842 | 0.016165143 | 0.017925207 | 0.015887827 | | |

In this embodiment, all QBSF-type aspheric surface types z of the optical imaging system 10 may be limited by using, but not limited to, the following aspheric formula:

$$z = \frac{cr^2}{1+\sqrt{1-(K+1)c^2r^2}} + \frac{u^2(1-u^2)\sqrt{1-Kc^2r^2}}{\sqrt{1-(K+1)c^1r^2}} \sum_{m=0}^{13} a_m Q_M^{bfs}(u^2).$$

Herein, z is a vector height of an aspheric surface, r is radial coordinates of the aspheric surface, c is a spherical curvature of a vertex of the aspheric surface, K is a quadratic surface constant, and A4, A6, ..., and A30 are aspheric coefficients, and correspond to $a_1$, ..., and $a_{13}$ respectively.

FIG. 20 is a defocus curve diagram of the optical imaging system 10 according to this embodiment. As shown in FIG. 20, imaging quality (100 lp/mm) simulation results in different fields of view are shown. It can be learned from the figure that image quality in a short-focus position is greater than 0.5 in a T direction and an S direction.

FIG. 21 is a diagram of optical distortion of an optical imaging system according to an embodiment, where a distortion curve in the diagram of optical distortion represents a difference between imaging deformation and an ideal shape in this embodiment, a horizontal coordinate is a distortion value, and a vertical coordinate is a field of view.

It can be learned from the figure that, distortion of the optical imaging system in this embodiment in a long-focus position is within a range of 3%.

Refer to FIG. 22. A camera assembly 100 in this embodiment of this application includes the optical imaging system 10 and a photosensitive element 30, and the photosensitive element is disposed on an image side of the optical imaging system 10.

Specifically, the photosensitive element 30 may be an image sensor (image sensor), and may be a complementary metal oxide semiconductor (CMOS, Complementary Metal Oxide Semiconductor) image sensor or a charge-coupled device (CCD, Charge-coupled Device).

In an embodiment, a size of the photosensitive element 30 is 1 inch, so that a parsing capability of the camera assembly can be better improved.

In an embodiment, the camera assembly 100 further includes an ejection mechanism (not shown in the figure). The ejection mechanism is used in cooperation with the optical imaging system 10, and is configured to make the first group of the optical imaging system 10 eject from a non-working position to a working position.

Refer to FIG. 23. An electronic device 1000 in this embodiment of this application includes a housing 200 and the camera assembly 100. The camera assembly 100 is installed on the housing 200 to obtain an image.

The electronic device 1000 in this embodiment of this application includes but is not limited to an electronic device that supports imaging, such as a smartphone, an in-vehicle lens, a surveillance lens, a tablet computer, a notebook computer, an e-book reader, a portable multimedia player (PMP), a portable telephone, a video telephone, a digital still camera, a mobile medical apparatus, or a wearable device.

It should be noted that the foregoing are only specific implementations of this application, but the protection scope of this application is not limited thereto. Any change or replacement readily figured out by a person skilled in the art within the technical scope disclosed in this application shall fall within the protection scope of this application. In a case of no conflict, features in the implementations and the implementations of this application may be mutually combined. Therefore, the protection scope of this application shall be subject to the protection scope of the claims.

## Claims

1. An optical imaging system, wherein the optical imaging system is used in cooperation with an ejection mechanism, the optical imaging system comprises a first lens to an $N^{th}$ lens that are sequentially disposed from an object side to an image side along an optical axis direction, and each of the first lens to the $N^{th}$ lens has a focal power, wherein $7 \leq N \leq 10$;

   the first lens to the $N^{th}$ lens are sequentially grouped into a first group and a second group from the object side to the image side, the first group has a positive focal power, and a spacing between the second group and the image plane in the optical axis direction is fixed; and
   the ejection mechanism is configured to drive the first group to eject from a non-working position to a working position along the optical axis direction, wherein the working position and the non-working position are sequentially disposed from the object side to the image side; and the optical imaging system meets the following relational expression:

$$0 < ImgH/TTL \leq 1,$$

wherein
TTL is a total optical length of the optical imaging system when the first group is in the working position, and ImgH is an imaging height corresponding to a half of a maximum field of angle of the optical imaging system.

**2.** The optical imaging system according to claim 1, wherein the first group comprises M lenses from the object side to the image side, wherein $5 \leq M \leq 8$; and the second group comprises two lenses from the object side to the image side.

**3.** The optical imaging system according to claim 1 or 2, wherein if N=7, a fourth lens, a fifth lens, and a sixth lens each have a positive focal power, and a third lens and a seventh lens each have a negative focal power.

**4.** The optical imaging system according to any one of claims 1 to 3, wherein the optical imaging system meets the following relational expression:

$$0<TTL0/TTL<0.8,$$

wherein
TTL0 is a total optical length of the optical imaging system when the first group is in the non-working position.

**5.** The optical imaging system according to any one of claims 1 to 4, wherein the optical imaging system meets the following relational expression:

$$1.4 \leq FNO \leq 2.4,$$

wherein
FNO is an F-number of the optical imaging system.

**6.** The optical imaging system according to any one of claims 1 to 5, wherein the optical imaging system meets the following relational expression:

$$0 \leq |f2/f3| \leq 0.7,$$

wherein
f2 is an effective focal length of a second lens, and f3 is an effective focal length of the third lens.

**7.** The optical imaging system according to any one of claims 1 to 6, wherein the optical imaging system meets the following relational expression:

$$0 \leq |fN/f| \leq 2,$$

wherein
fN is an effective focal length of the $N^{th}$ lens, and f is an effective focal length of the optical imaging system.

**8.** The optical imaging system according to any one of claims 1 to 7, wherein an image side surface of the fourth lens is a convex surface.

**9.** The optical imaging system according to any one of claims 1 to 8, wherein in the first lens to the $N^{th}$ lens, the $N^{th}$ lens has a maximum light transmission aperture.

**10.** A camera assembly, comprising the optical imaging system according to any one of claims 1 to 9 and a photosensitive element, wherein the photosensitive element is located on an image side of the optical imaging system.

**11.** The camera assembly according to claim 10, wherein a size of the photosensitive element is 1 foot.

**12.** An electronic device, comprising the camera assembly according to claim 10 or 11.

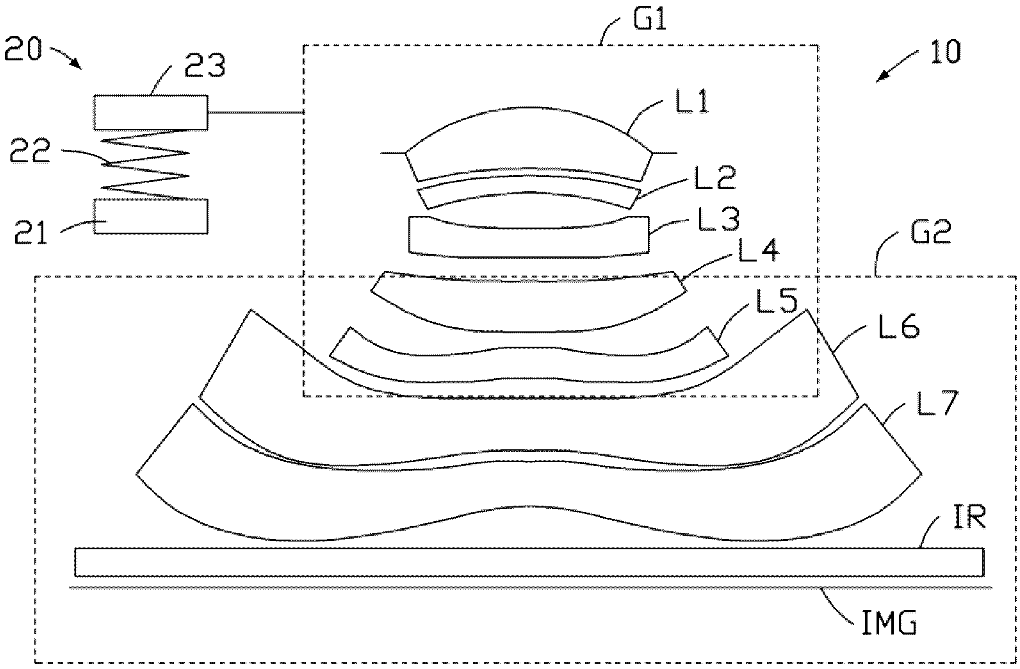


Non-working state

FIG. 1

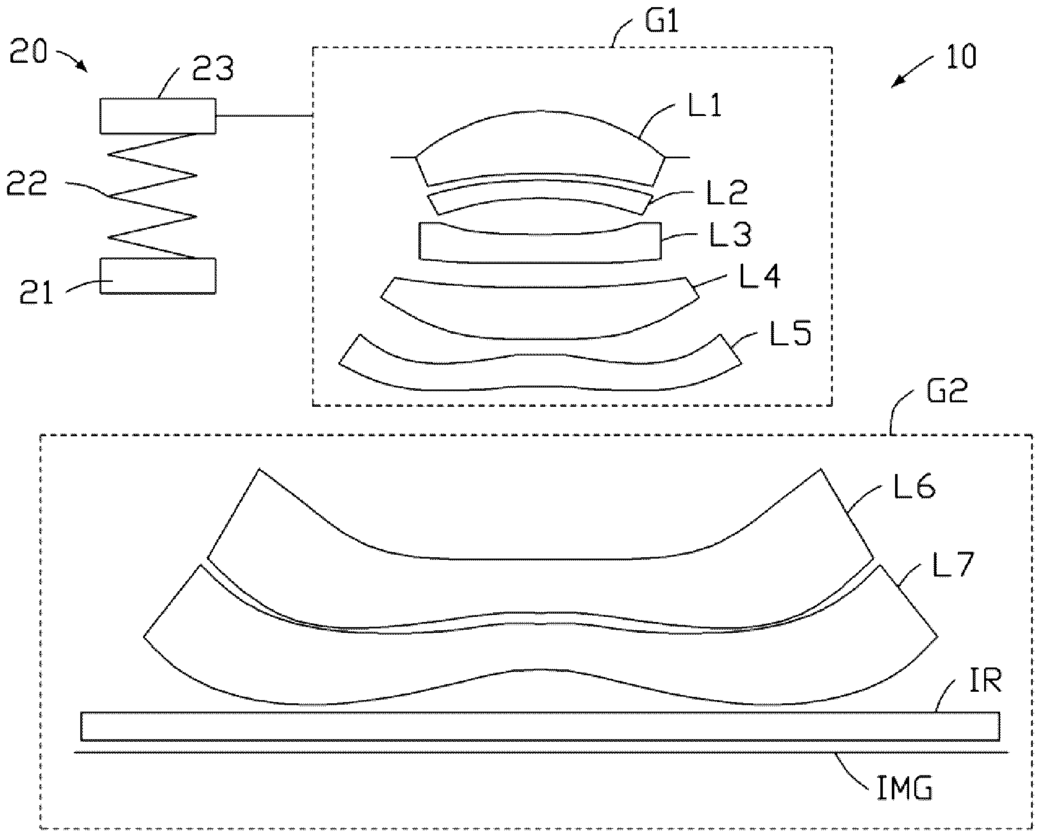


Working state

FIG. 2

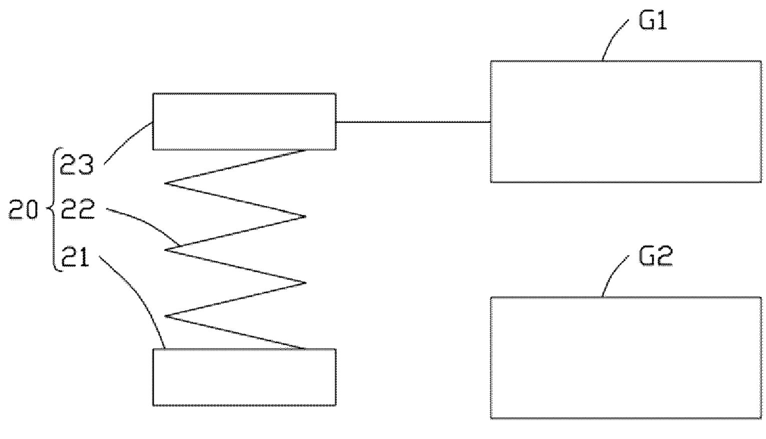


FIG. 3

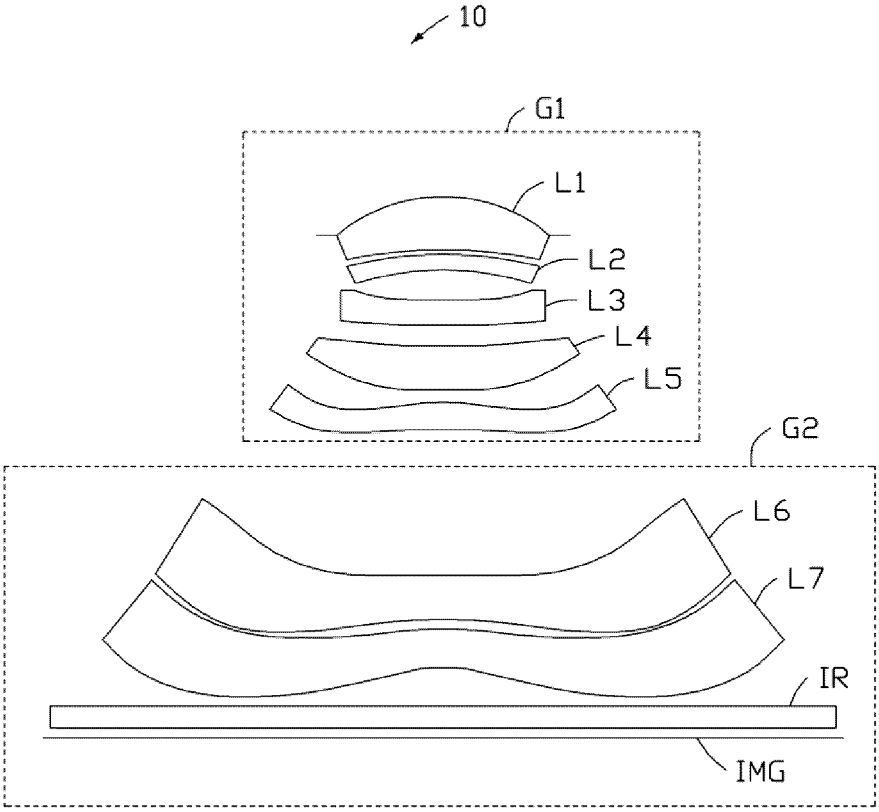


FIG. 4

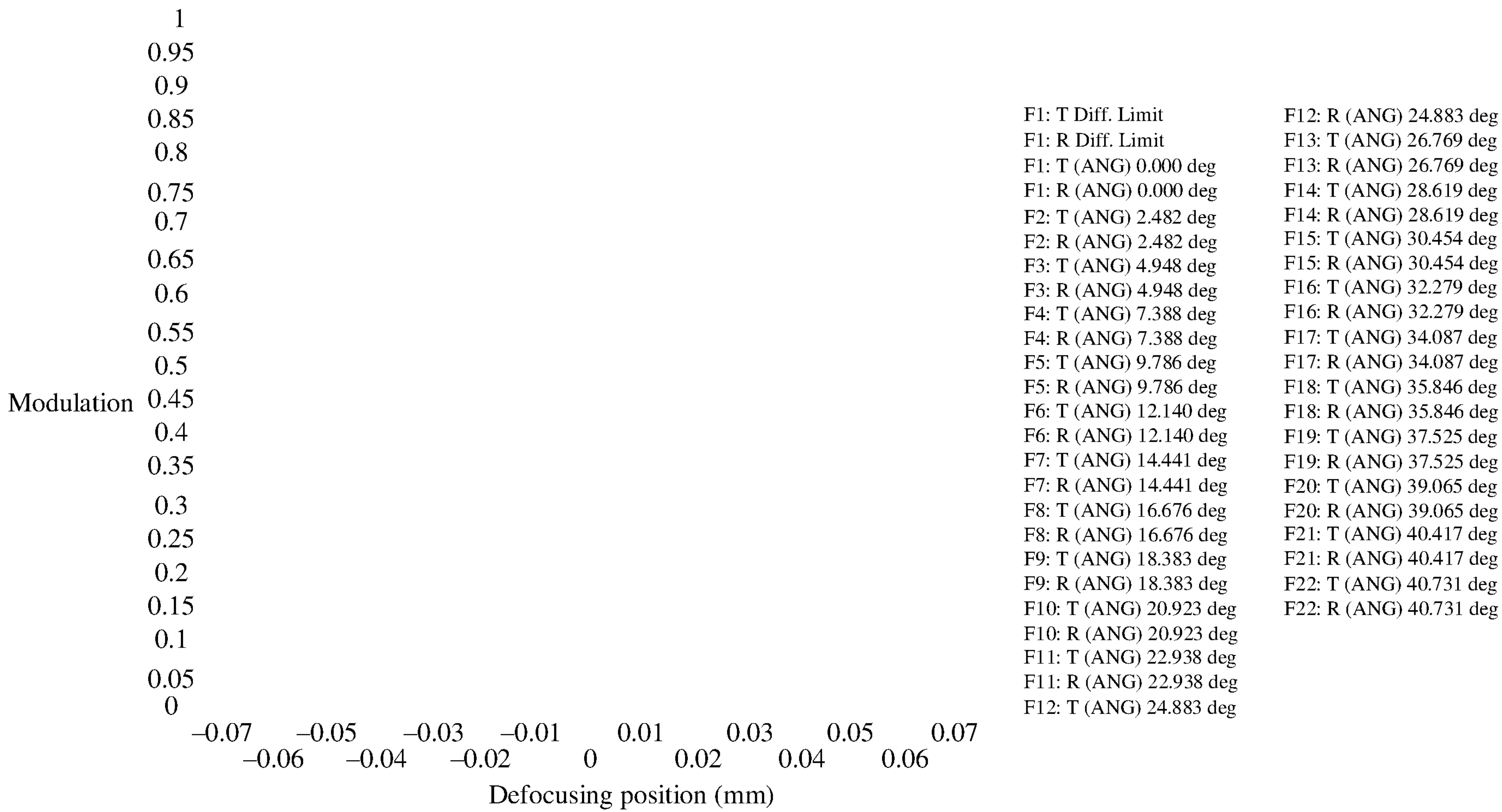
Modulation
1
0.95
0.9
0.85
0.8
0.75
0.7
0.65
0.6
0.55
0.5
0.45
0.4
0.35
0.3
0.25
0.2
0.15
0.1
0.05
0
–0.07 –0.06 –0.05 –0.04 –0.03 –0.02 –0.01 0 0.01 0.02 0.03 0.04 0.05 0.06 0.07
Defocusing position (mm)
F1: T Diff. Limit
F1: R Diff. Limit
F1: T (ANG) 0.000 deg
F1: R (ANG) 0.000 deg
F2: T (ANG) 2.482 deg
F2: R (ANG) 2.482 deg
F3: T (ANG) 4.948 deg
F3: R (ANG) 4.948 deg
F4: T (ANG) 7.388 deg
F4: R (ANG) 7.388 deg
F5: T (ANG) 9.786 deg
F5: R (ANG) 9.786 deg
F6: T (ANG) 12.140 deg
F6: R (ANG) 12.140 deg
F7: T (ANG) 14.441 deg
F7: R (ANG) 14.441 deg
F8: T (ANG) 16.676 deg
F8: R (ANG) 16.676 deg
F9: T (ANG) 18.383 deg
F9: R (ANG) 18.383 deg
F10: T (ANG) 20.923 deg
F10: R (ANG) 20.923 deg
F11: T (ANG) 22.938 deg
F11: R (ANG) 22.938 deg
F12: T (ANG) 24.883 deg
F12: R (ANG) 24.883 deg
F13: T (ANG) 26.769 deg
F13: R (ANG) 26.769 deg
F14: T (ANG) 28.619 deg
F14: R (ANG) 28.619 deg
F15: T (ANG) 30.454 deg
F15: R (ANG) 30.454 deg
F16: T (ANG) 32.279 deg
F16: R (ANG) 32.279 deg
F17: T (ANG) 34.087 deg
F17: R (ANG) 34.087 deg
F18: T (ANG) 35.846 deg
F18: R (ANG) 35.846 deg
F19: T (ANG) 37.525 deg
F19: R (ANG) 37.525 deg
F20: T (ANG) 39.065 deg
F20: R (ANG) 39.065 deg
F21: T (ANG) 40.417 deg
F21: R (ANG) 40.417 deg
F22: T (ANG) 40.731 deg
F22: R (ANG) 40.731 deg

FIG. 5

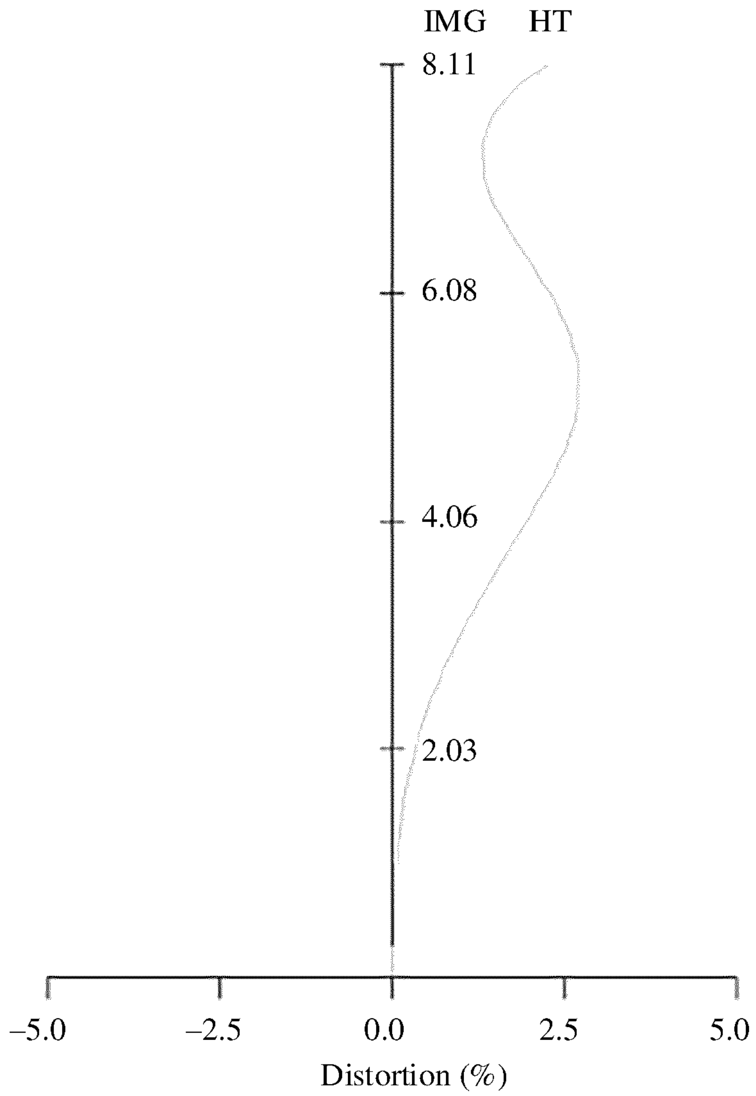


FIG. 6

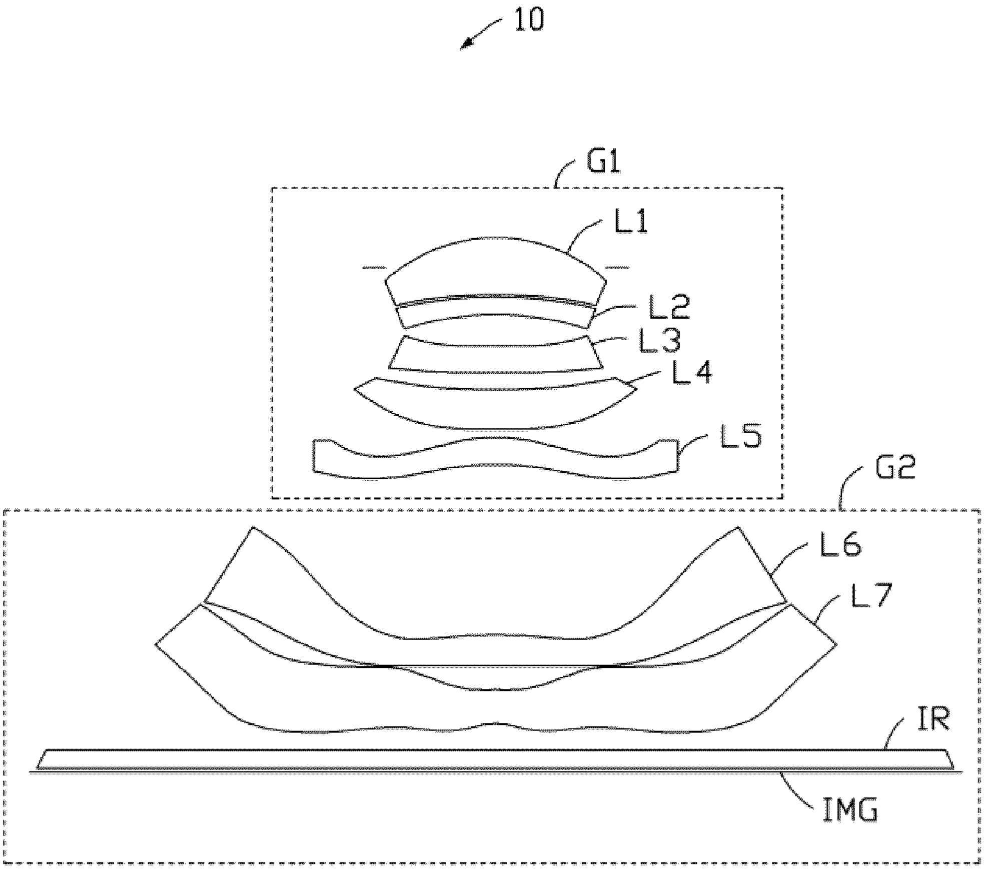


FIG. 7

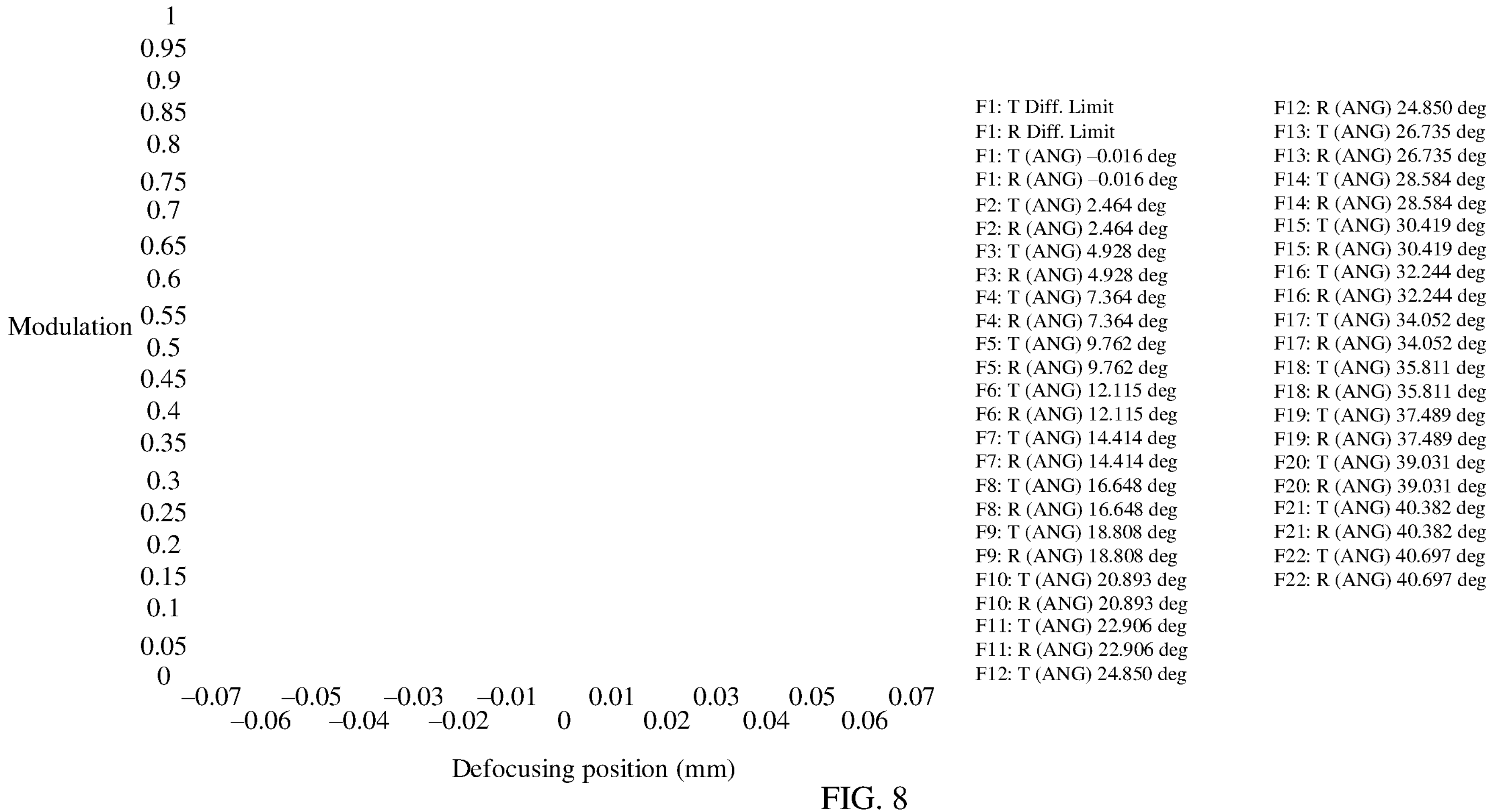
Modulation
1
0.95
0.9
0.85
0.8
0.75
0.7
0.65
0.6
0.55
0.5
0.45
0.4
0.35
0.3
0.25
0.2
0.15
0.1
0.05
0
–0.07 –0.06 –0.05 –0.04 –0.03 –0.02 –0.01 0 0.01 0.02 0.03 0.04 0.05 0.06 0.07
Defocusing position (mm)
F1: T Diff. Limit
F1: R Diff. Limit
F1: T (ANG) –0.016 deg
F1: R (ANG) –0.016 deg
F2: T (ANG) 2.464 deg
F2: R (ANG) 2.464 deg
F3: T (ANG) 4.928 deg
F3: R (ANG) 4.928 deg
F4: T (ANG) 7.364 deg
F4: R (ANG) 7.364 deg
F5: T (ANG) 9.762 deg
F5: R (ANG) 9.762 deg
F6: T (ANG) 12.115 deg
F6: R (ANG) 12.115 deg
F7: T (ANG) 14.414 deg
F7: R (ANG) 14.414 deg
F8: T (ANG) 16.648 deg
F8: R (ANG) 16.648 deg
F9: T (ANG) 18.808 deg
F9: R (ANG) 18.808 deg
F10: T (ANG) 20.893 deg
F10: R (ANG) 20.893 deg
F11: T (ANG) 22.906 deg
F11: R (ANG) 22.906 deg
F12: T (ANG) 24.850 deg
F12: R (ANG) 24.850 deg
F13: T (ANG) 26.735 deg
F13: R (ANG) 26.735 deg
F14: T (ANG) 28.584 deg
F14: R (ANG) 28.584 deg
F15: T (ANG) 30.419 deg
F15: R (ANG) 30.419 deg
F16: T (ANG) 32.244 deg
F16: R (ANG) 32.244 deg
F17: T (ANG) 34.052 deg
F17: R (ANG) 34.052 deg
F18: T (ANG) 35.811 deg
F18: R (ANG) 35.811 deg
F19: T (ANG) 37.489 deg
F19: R (ANG) 37.489 deg
F20: T (ANG) 39.031 deg
F20: R (ANG) 39.031 deg
F21: T (ANG) 40.382 deg
F21: R (ANG) 40.382 deg
F22: T (ANG) 40.697 deg
F22: R (ANG) 40.697 deg

FIG. 8

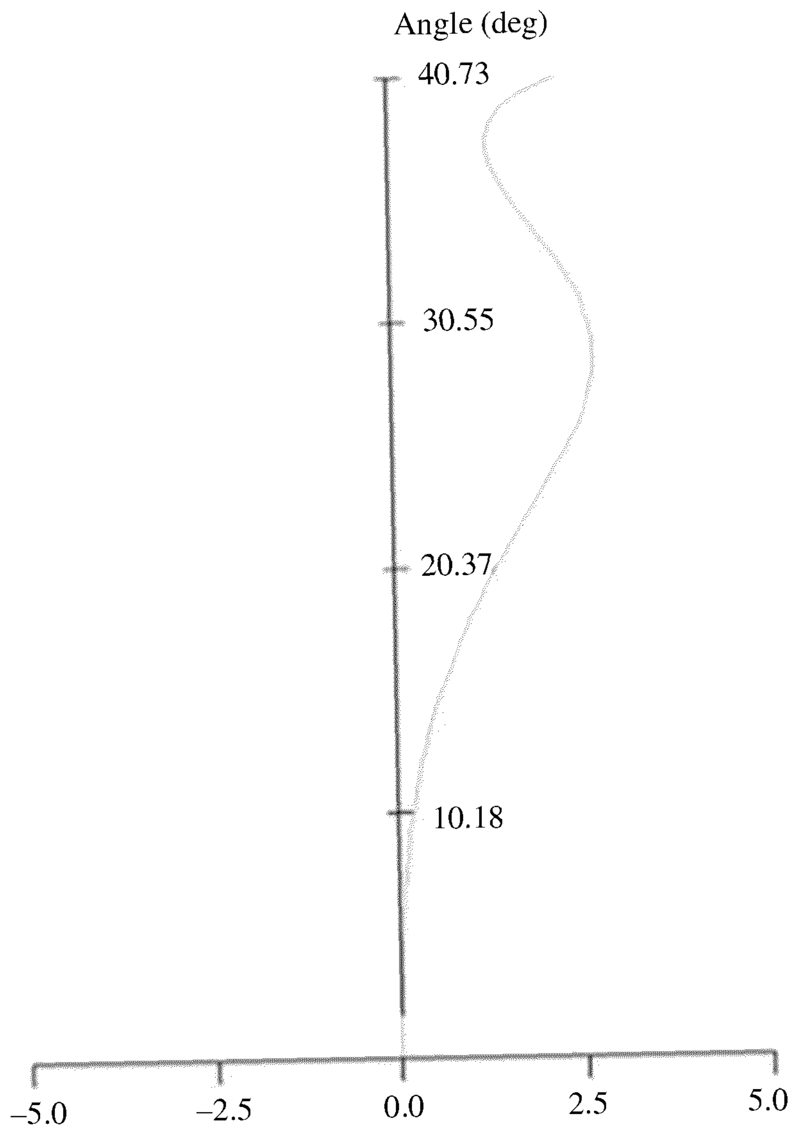


FIG. 9

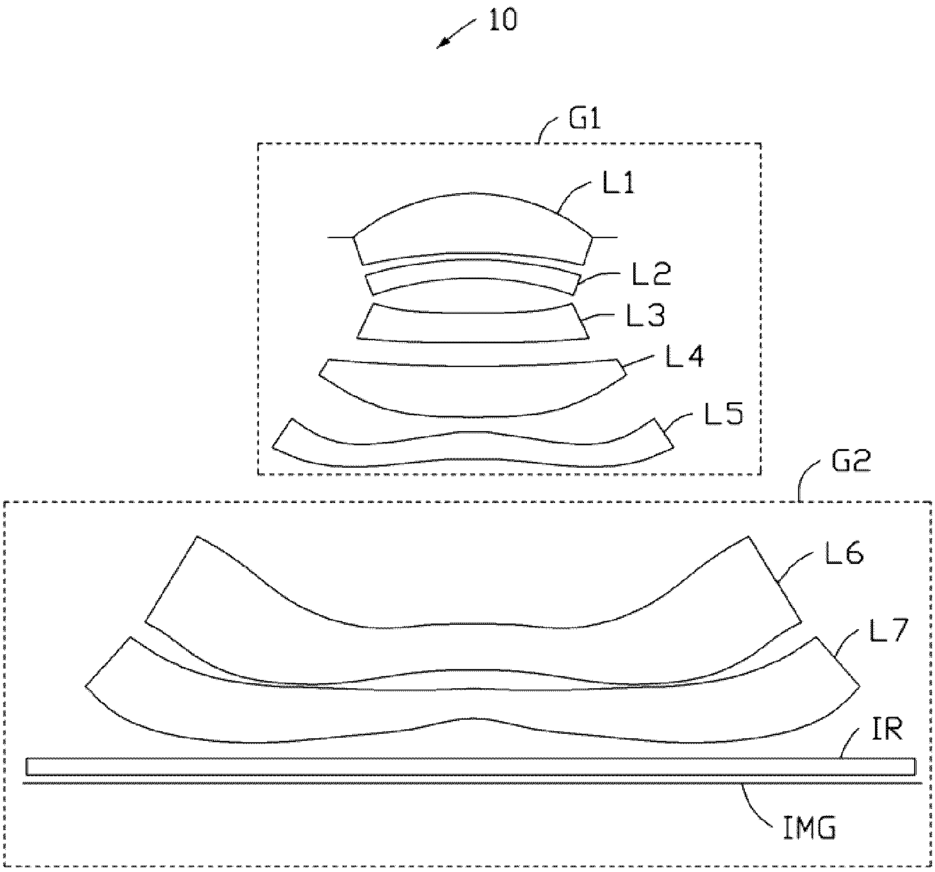


FIG. 10

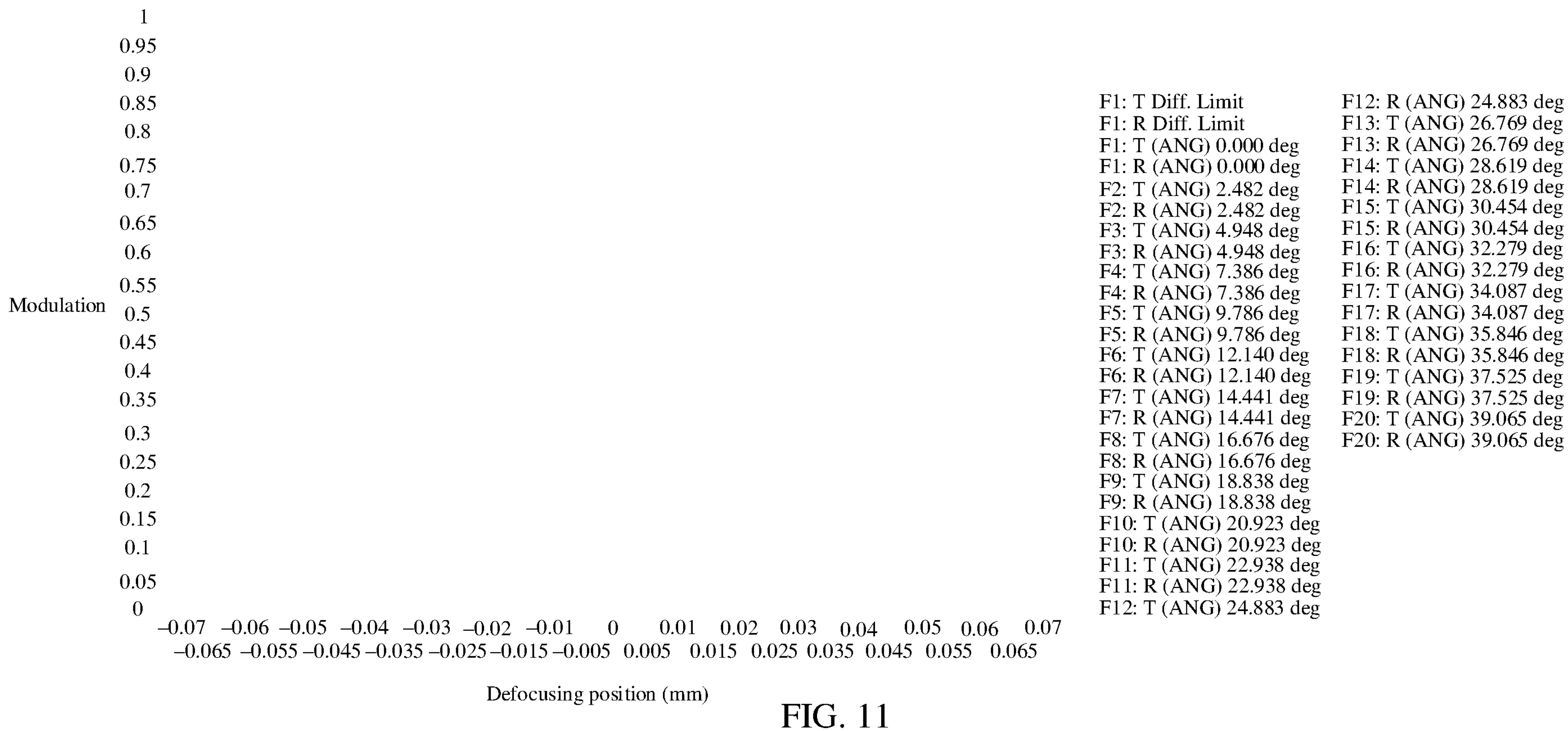
Modulation
1
0.95
0.9
0.85
0.8
0.75
0.7
0.65
0.6
0.55
0.5
0.45
0.4
0.35
0.3
0.25
0.2
0.15
0.1
0.05
0
–0.07 –0.06 –0.05 –0.04 –0.03 –0.02 –0.01 0 0.01 0.02 0.03 0.04 0.05 0.06 0.07
–0.065 –0.055 –0.045 –0.035 –0.025 –0.015 –0.005 0.005 0.015 0.025 0.035 0.045 0.055 0.065
Defocusing position (mm)
F1: T Diff. Limit
F1: R Diff. Limit
F1: T (ANG) 0.000 deg
F1: R (ANG) 0.000 deg
F2: T (ANG) 2.482 deg
F2: R (ANG) 2.482 deg
F3: T (ANG) 4.948 deg
F3: R (ANG) 4.948 deg
F4: T (ANG) 7.386 deg
F4: R (ANG) 7.386 deg
F5: T (ANG) 9.786 deg
F5: R (ANG) 9.786 deg
F6: T (ANG) 12.140 deg
F6: R (ANG) 12.140 deg
F7: T (ANG) 14.441 deg
F7: R (ANG) 14.441 deg
F8: T (ANG) 16.676 deg
F8: R (ANG) 16.676 deg
F9: T (ANG) 18.838 deg
F9: R (ANG) 18.838 deg
F10: T (ANG) 20.923 deg
F10: R (ANG) 20.923 deg
F11: T (ANG) 22.938 deg
F11: R (ANG) 22.938 deg
F12: T (ANG) 24.883 deg
F12: R (ANG) 24.883 deg
F13: T (ANG) 26.769 deg
F13: R (ANG) 26.769 deg
F14: T (ANG) 28.619 deg
F14: R (ANG) 28.619 deg
F15: T (ANG) 30.454 deg
F15: R (ANG) 30.454 deg
F16: T (ANG) 32.279 deg
F16: R (ANG) 32.279 deg
F17: T (ANG) 34.087 deg
F17: R (ANG) 34.087 deg
F18: T (ANG) 35.846 deg
F18: R (ANG) 35.846 deg
F19: T (ANG) 37.525 deg
F19: R (ANG) 37.525 deg
F20: T (ANG) 39.065 deg
F20: R (ANG) 39.065 deg

FIG. 11

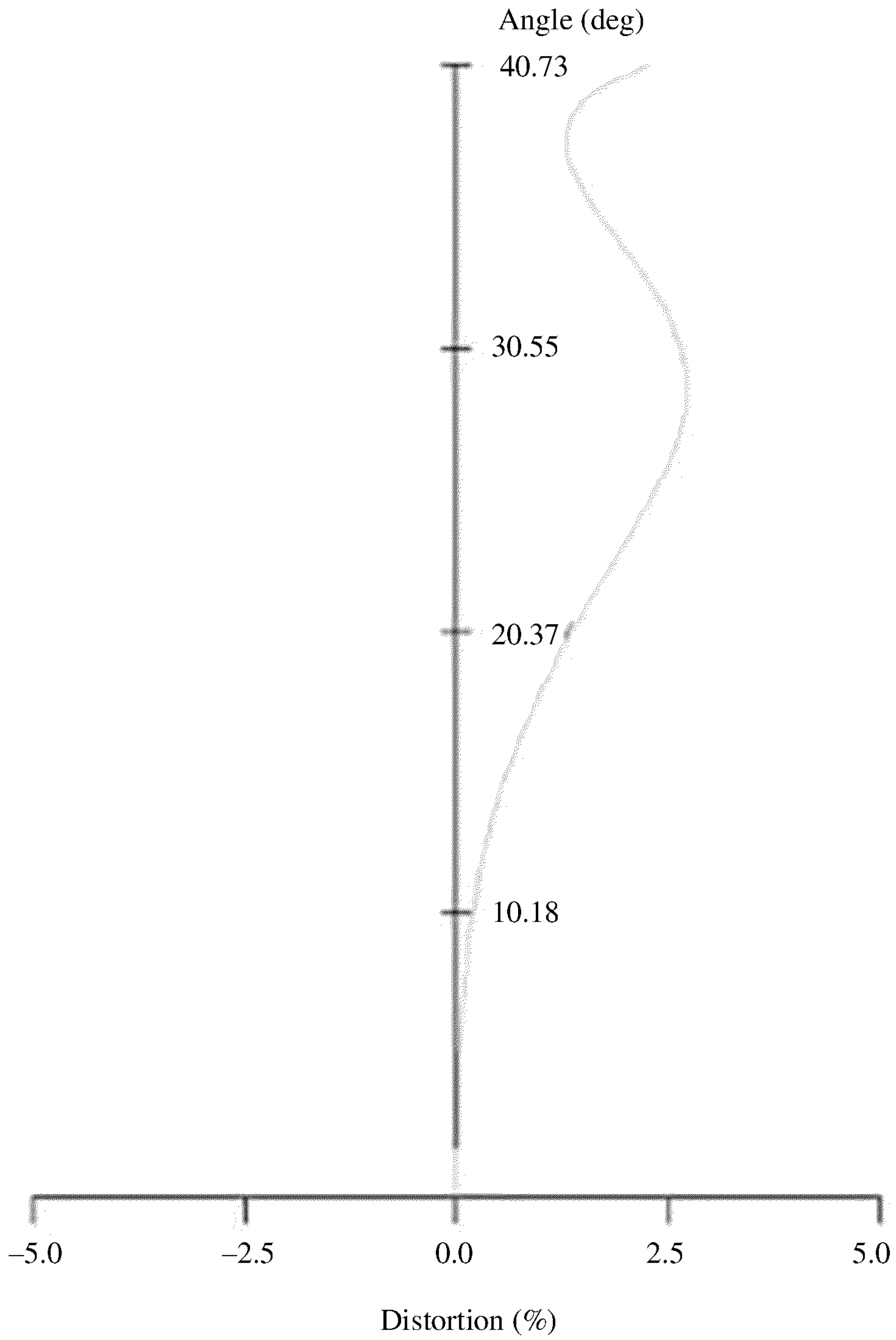


FIG. 12

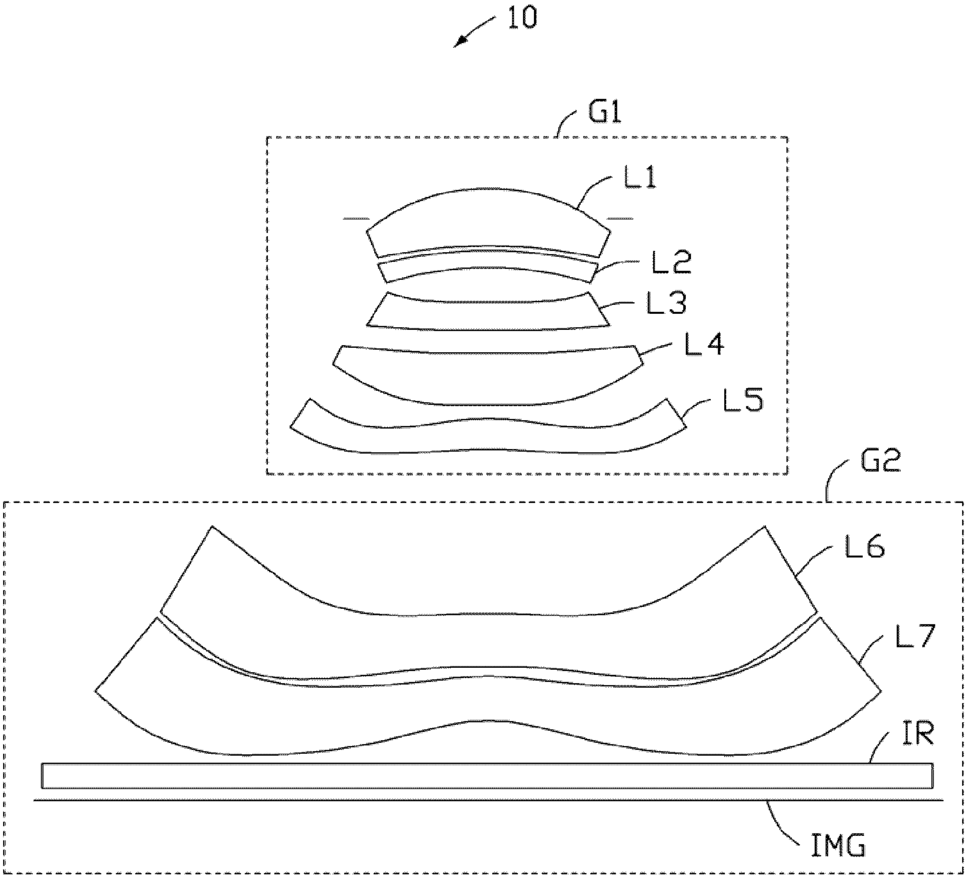


FIG. 13

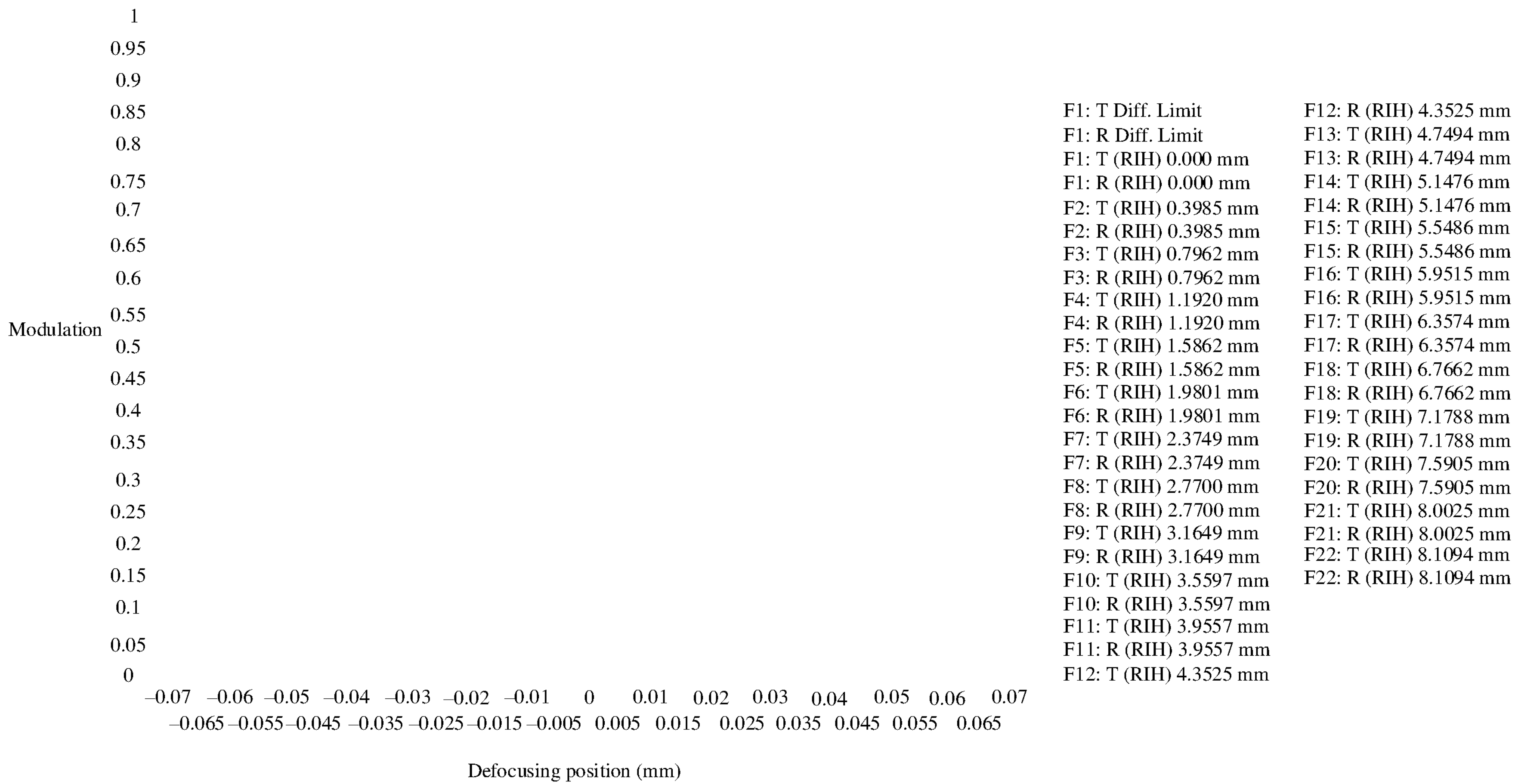
Modulation
1
0.95
0.9
0.85
0.8
0.75
0.7
0.65
0.6
0.55
0.5
0.45
0.4
0.35
0.3
0.25
0.2
0.15
0.1
0.05
0
–0.07 –0.06 –0.05 –0.04 –0.03 –0.02 –0.01 0 0.01 0.02 0.03 0.04 0.05 0.06 0.07
–0.065 –0.055 –0.045 –0.035 –0.025 –0.015 –0.005 0.005 0.015 0.025 0.035 0.045 0.055 0.065
Defocusing position (mm)
F1: T Diff. Limit
F1: R Diff. Limit
F1: T (RIH) 0.000 mm
F1: R (RIH) 0.000 mm
F2: T (RIH) 0.3985 mm
F2: R (RIH) 0.3985 mm
F3: T (RIH) 0.7962 mm
F3: R (RIH) 0.7962 mm
F4: T (RIH) 1.1920 mm
F4: R (RIH) 1.1920 mm
F5: T (RIH) 1.5862 mm
F5: R (RIH) 1.5862 mm
F6: T (RIH) 1.9801 mm
F6: R (RIH) 1.9801 mm
F7: T (RIH) 2.3749 mm
F7: R (RIH) 2.3749 mm
F8: T (RIH) 2.7700 mm
F8: R (RIH) 2.7700 mm
F9: T (RIH) 3.1649 mm
F9: R (RIH) 3.1649 mm
F10: T (RIH) 3.5597 mm
F10: R (RIH) 3.5597 mm
F11: T (RIH) 3.9557 mm
F11: R (RIH) 3.9557 mm
F12: T (RIH) 4.3525 mm
F12: R (RIH) 4.3525 mm
F13: T (RIH) 4.7494 mm
F13: R (RIH) 4.7494 mm
F14: T (RIH) 5.1476 mm
F14: R (RIH) 5.1476 mm
F15: T (RIH) 5.5486 mm
F15: R (RIH) 5.5486 mm
F16: T (RIH) 5.9515 mm
F16: R (RIH) 5.9515 mm
F17: T (RIH) 6.3574 mm
F17: R (RIH) 6.3574 mm
F18: T (RIH) 6.7662 mm
F18: R (RIH) 6.7662 mm
F19: T (RIH) 7.1788 mm
F19: R (RIH) 7.1788 mm
F20: T (RIH) 7.5905 mm
F20: R (RIH) 7.5905 mm
F21: T (RIH) 8.0025 mm
F21: R (RIH) 8.0025 mm
F22: T (RIH) 8.1094 mm
F22: R (RIH) 8.1094 mm

FIG. 14

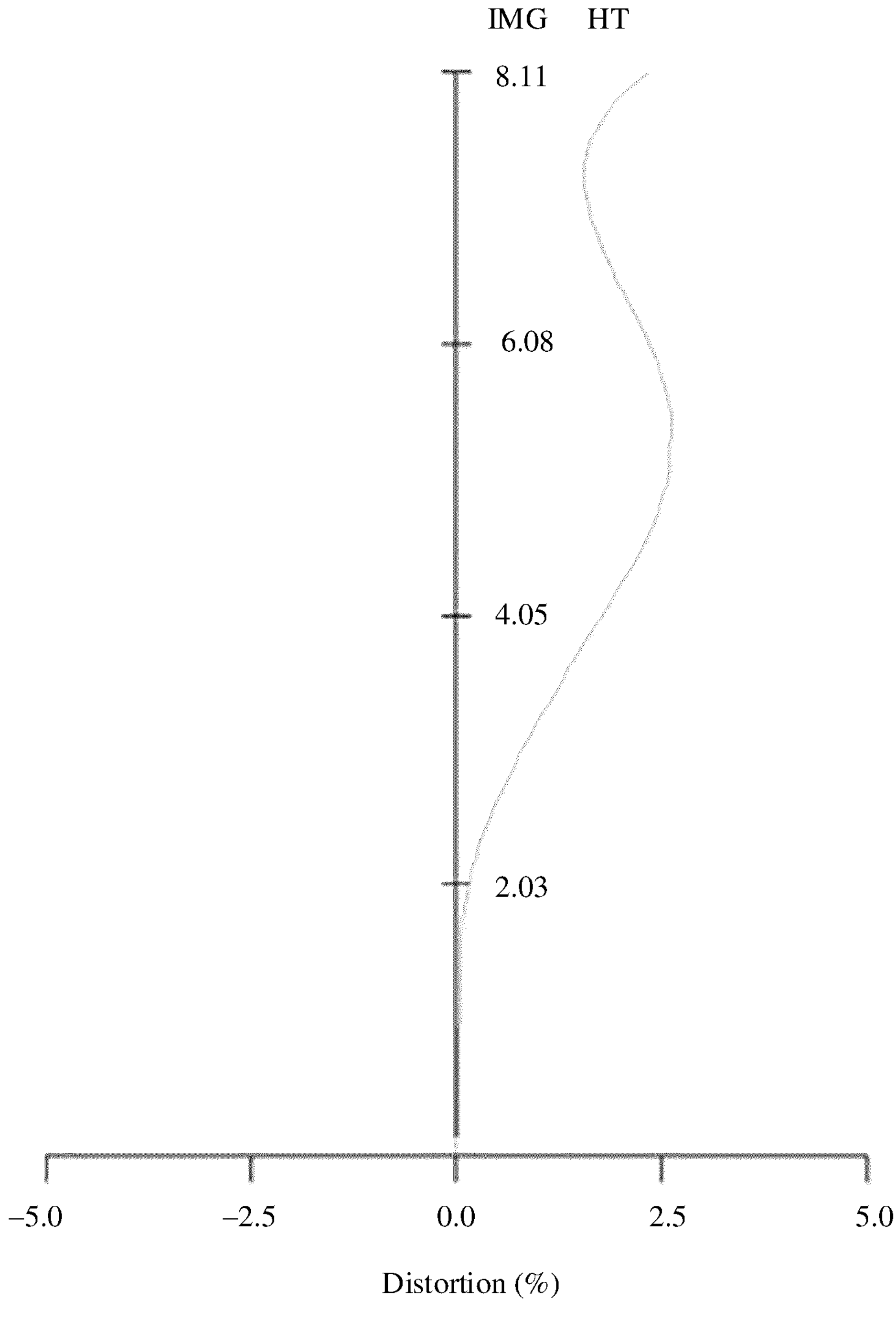


FIG. 15

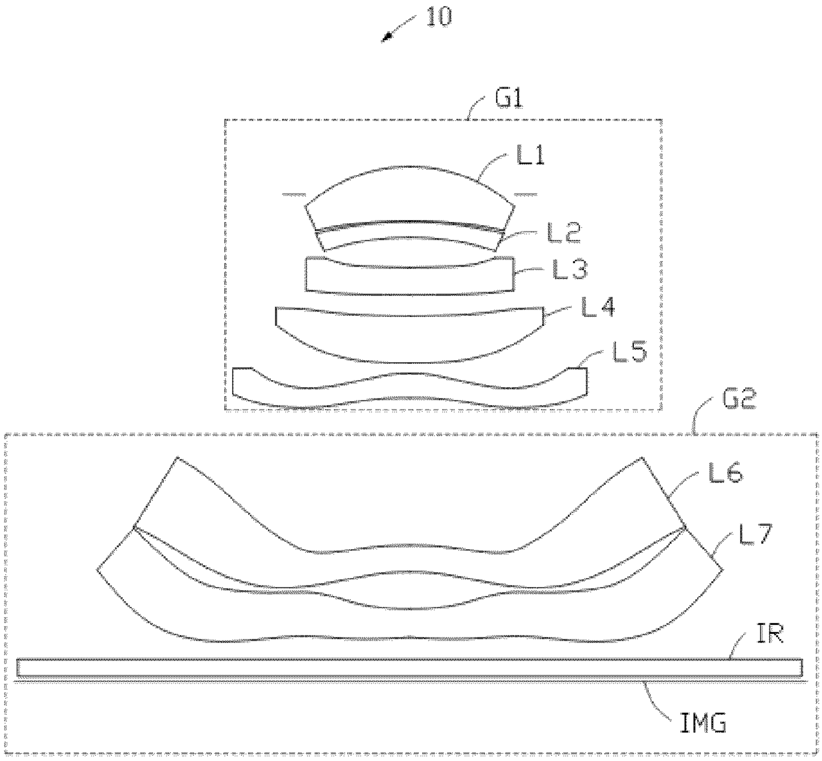


FIG. 16

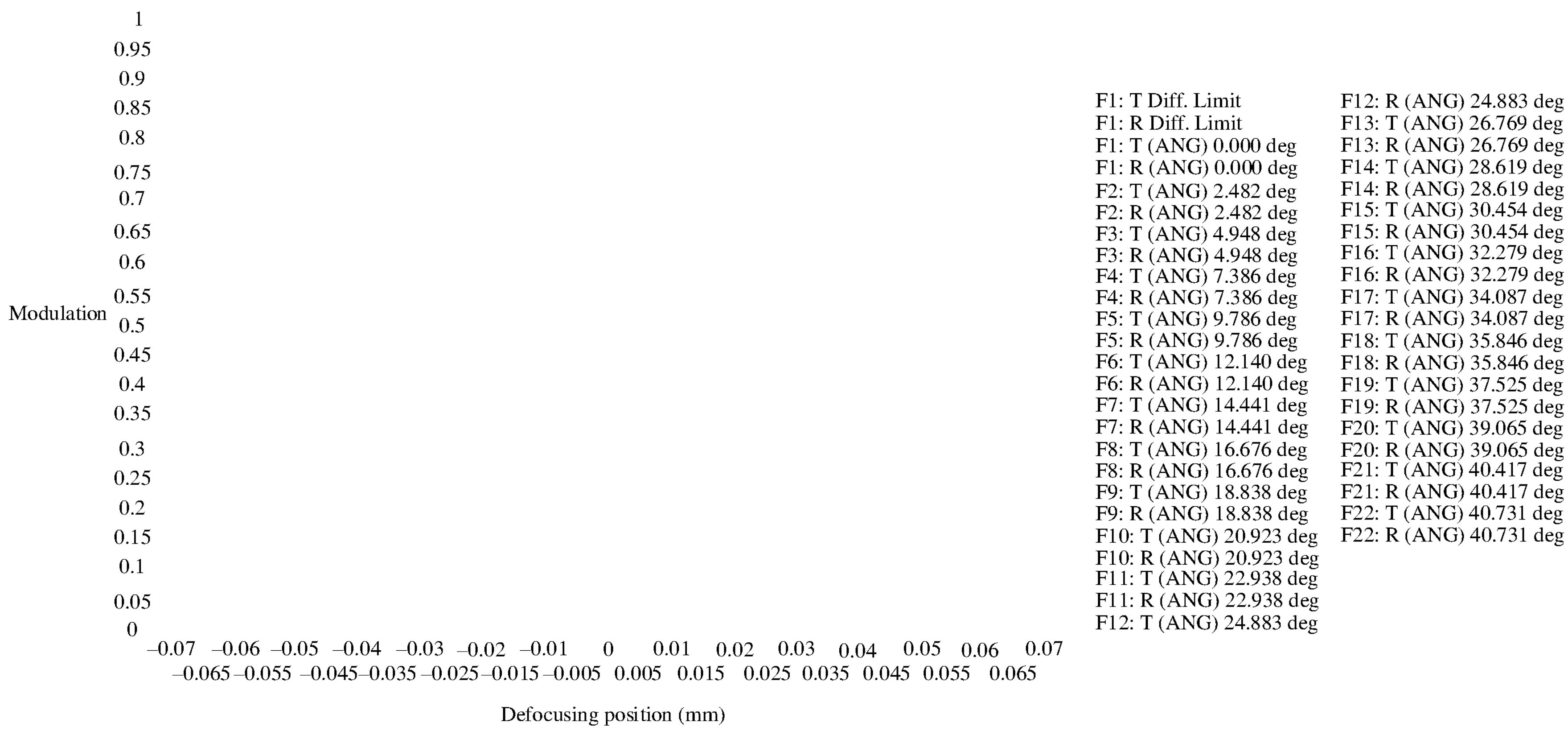
Modulation
1
0.95
0.9
0.85
0.8
0.75
0.7
0.65
0.6
0.55
0.5
0.45
0.4
0.35
0.3
0.25
0.2
0.15
0.1
0.05
0
–0.07 –0.06 –0.05 –0.04 –0.03 –0.02 –0.01 0 0.01 0.02 0.03 0.04 0.05 0.06 0.07
–0.065 –0.055 –0.045 –0.035 –0.025 –0.015 –0.005 0.005 0.015 0.025 0.035 0.045 0.055 0.065
Defocusing position (mm)
F1: T Diff. Limit
F1: R Diff. Limit
F1: T (ANG) 0.000 deg
F1: R (ANG) 0.000 deg
F2: T (ANG) 2.482 deg
F2: R (ANG) 2.482 deg
F3: T (ANG) 4.948 deg
F3: R (ANG) 4.948 deg
F4: T (ANG) 7.386 deg
F4: R (ANG) 7.386 deg
F5: T (ANG) 9.786 deg
F5: R (ANG) 9.786 deg
F6: T (ANG) 12.140 deg
F6: R (ANG) 12.140 deg
F7: T (ANG) 14.441 deg
F7: R (ANG) 14.441 deg
F8: T (ANG) 16.676 deg
F8: R (ANG) 16.676 deg
F9: T (ANG) 18.838 deg
F9: R (ANG) 18.838 deg
F10: T (ANG) 20.923 deg
F10: R (ANG) 20.923 deg
F11: T (ANG) 22.938 deg
F11: R (ANG) 22.938 deg
F12: T (ANG) 24.883 deg
F12: R (ANG) 24.883 deg
F13: T (ANG) 26.769 deg
F13: R (ANG) 26.769 deg
F14: T (ANG) 28.619 deg
F14: R (ANG) 28.619 deg
F15: T (ANG) 30.454 deg
F15: R (ANG) 30.454 deg
F16: T (ANG) 32.279 deg
F16: R (ANG) 32.279 deg
F17: T (ANG) 34.087 deg
F17: R (ANG) 34.087 deg
F18: T (ANG) 35.846 deg
F18: R (ANG) 35.846 deg
F19: T (ANG) 37.525 deg
F19: R (ANG) 37.525 deg
F20: T (ANG) 39.065 deg
F20: R (ANG) 39.065 deg
F21: T (ANG) 40.417 deg
F21: R (ANG) 40.417 deg
F22: T (ANG) 40.731 deg
F22: R (ANG) 40.731 deg

FIG. 17

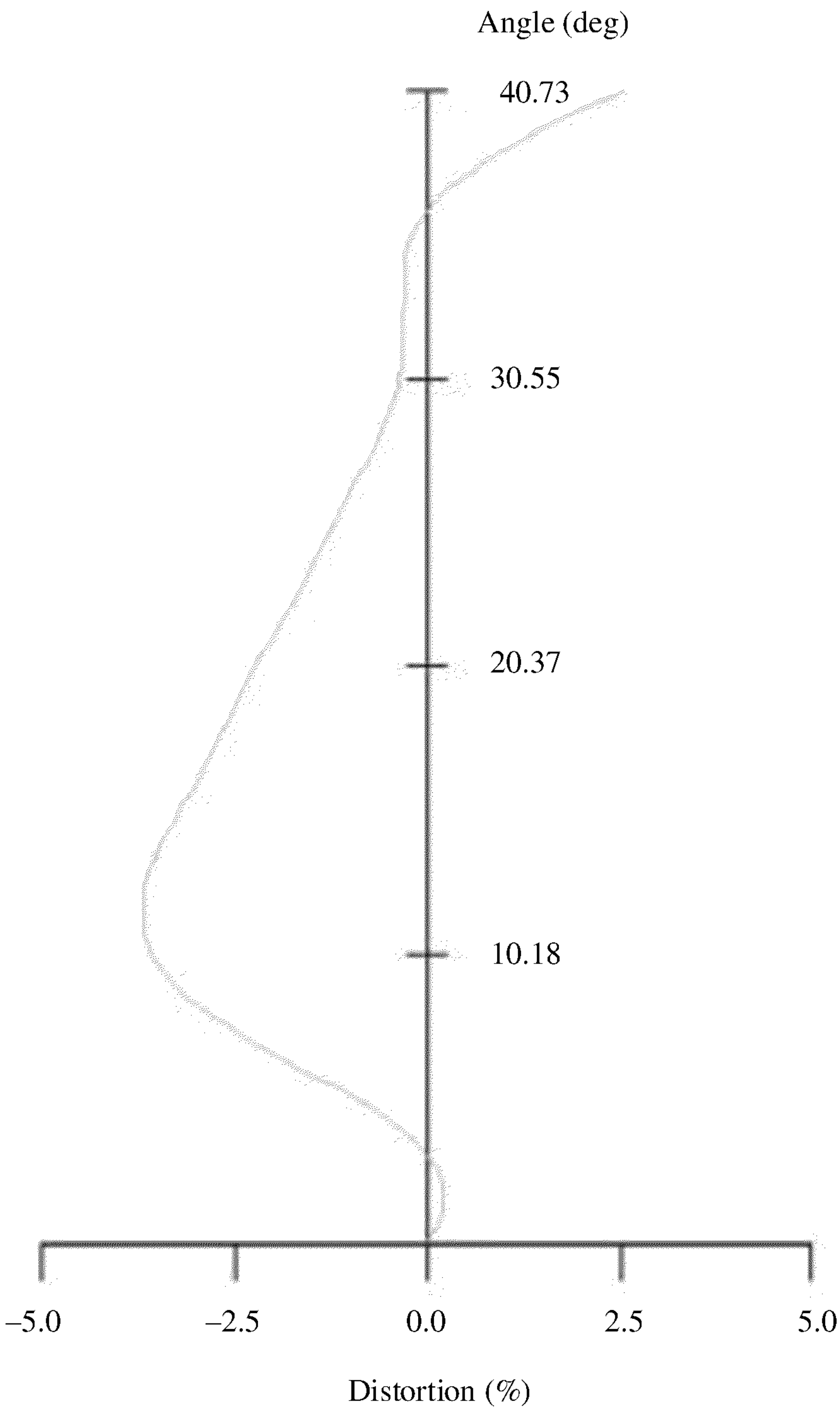


FIG. 18

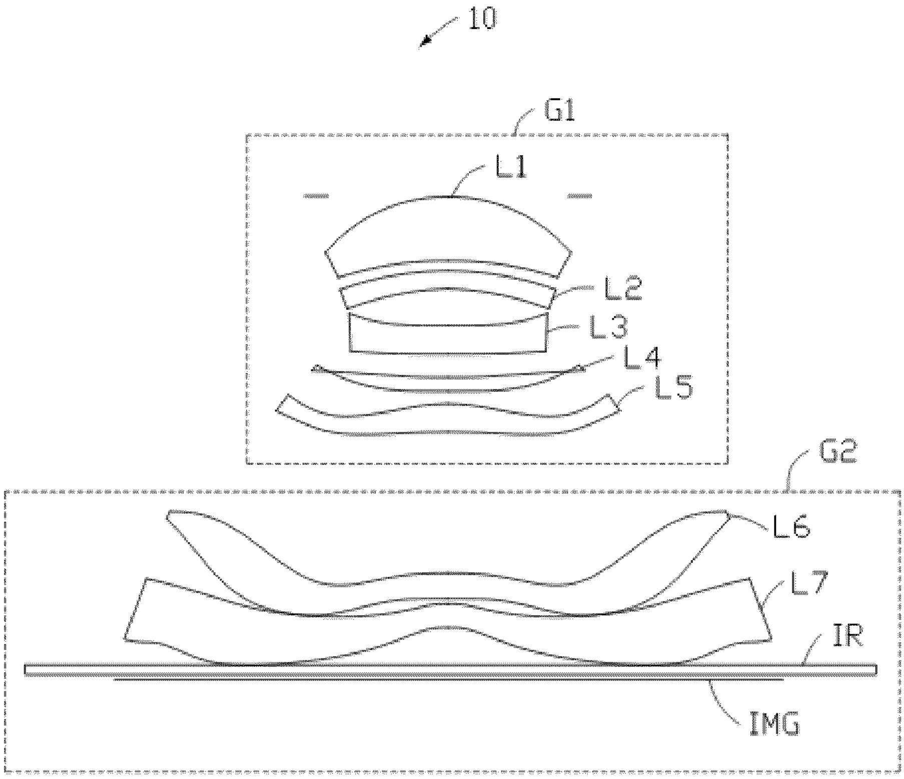


FIG. 19

Modulation

1
0.95
0.9
0.85
0.8
0.75
0.7
0.65
0.6
0.55
0.5
0.45
0.4
0.35
0.3
0.25
0.2
0.15
0.1
0.05
0

–0.07 –0.06 –0.05 –0.04 –0.03 –0.02 –0.01 0 0.01 0.02 0.03 0.04 0.05 0.06 0.07
–0.065 –0.055 –0.045 –0.035 –0.025 –0.015 –0.005 0.005 0.015 0.025 0.035 0.045 0.055 0.065

Defocusing position (mm)

F1: T Diff. Limit
F1: R Diff. Limit
F1: T (ANG) 0.000 deg
F1: R (ANG) 0.000 deg
F2: T (ANG) 2.522 deg
F2: R (ANG) 2.522 deg
F3: T (ANG) 5.023 deg
F3: R (ANG) 5.023 deg
F4: T (ANG) 7.487 deg
F4: R (ANG) 7.487 deg
F5: T (ANG) 9.903 deg
F5: R (ANG) 9.903 deg
F6: T (ANG) 12.263 deg
F6: R (ANG) 12.263 deg
F7: T (ANG) 14.565 deg
F7: R (ANG) 14.565 deg
F8: T (ANG) 16.800 deg
F8: R (ANG) 16.800 deg
F9: T (ANG) 18.963 deg
F9: R (ANG) 18.963 deg
F10: T (ANG) 21.053 deg
F10: R (ANG) 21.053 deg
F11: T (ANG) 23.076 deg
F11: R (ANG) 23.076 deg
F12: T (ANG) 25.037 deg
F12: R (ANG) 25.037 deg
F13: T (ANG) 26.953 deg
F13: R (ANG) 26.953 deg
F14: T (ANG) 28.846 deg
F14: R (ANG) 28.846 deg
F15: T (ANG) 30.726 deg
F15: R (ANG) 30.726 deg
F16: T (ANG) 32.599 deg
F16: R (ANG) 32.599 deg

FIG. 20

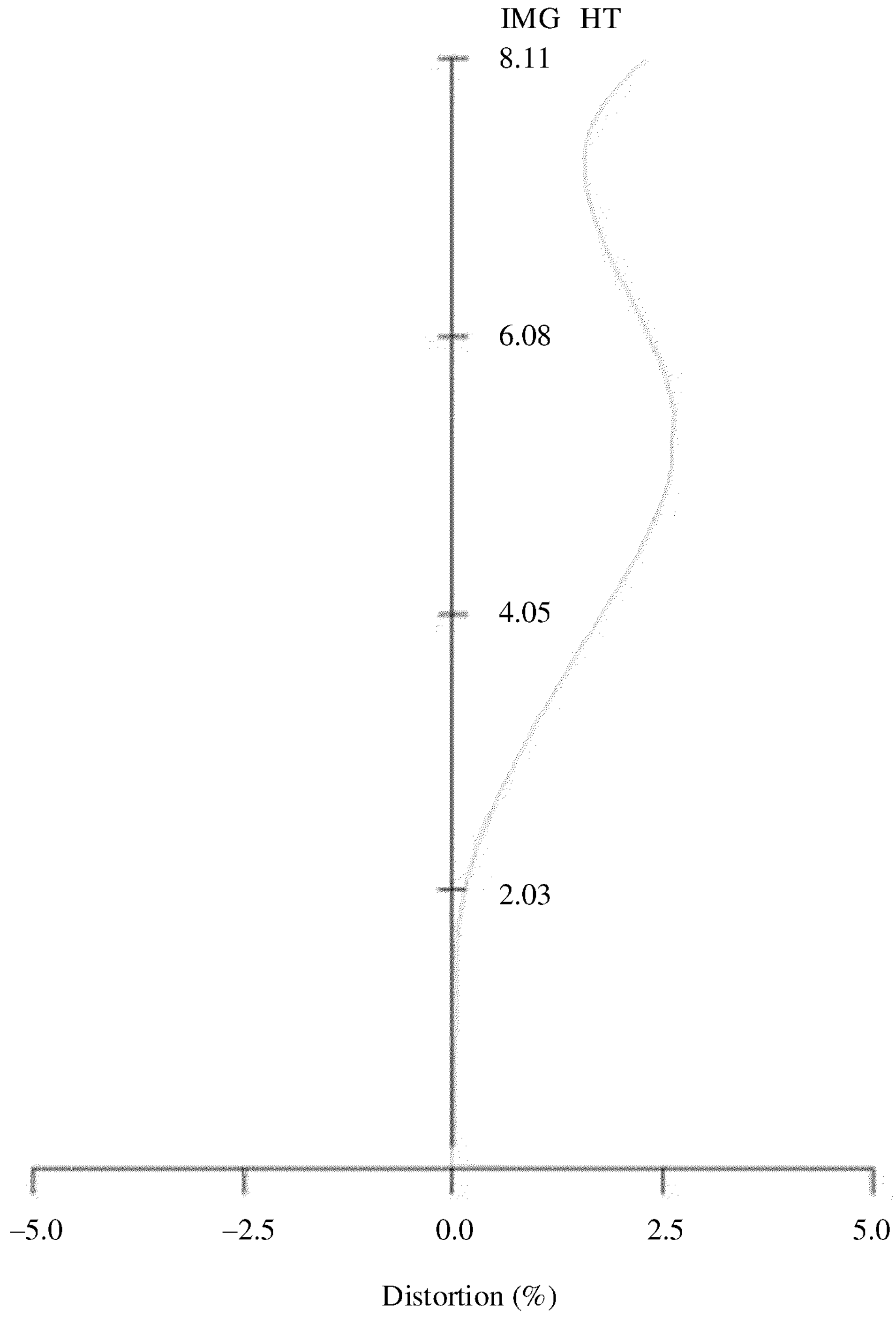


FIG. 21

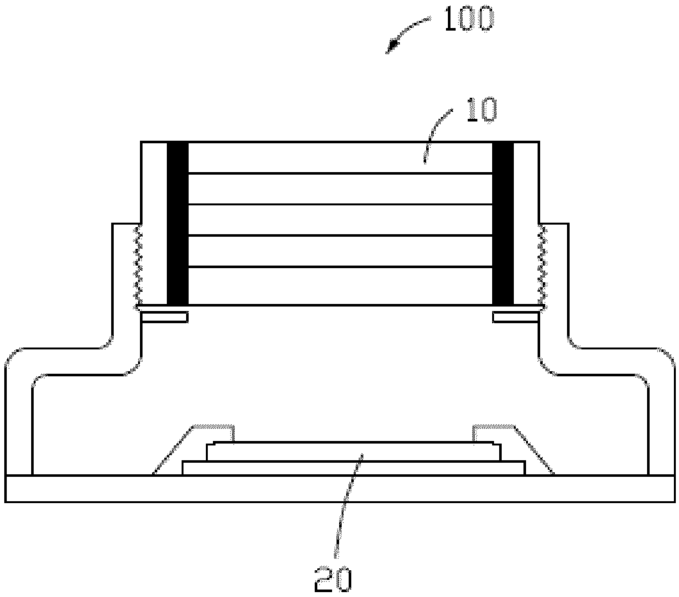


FIG. 22

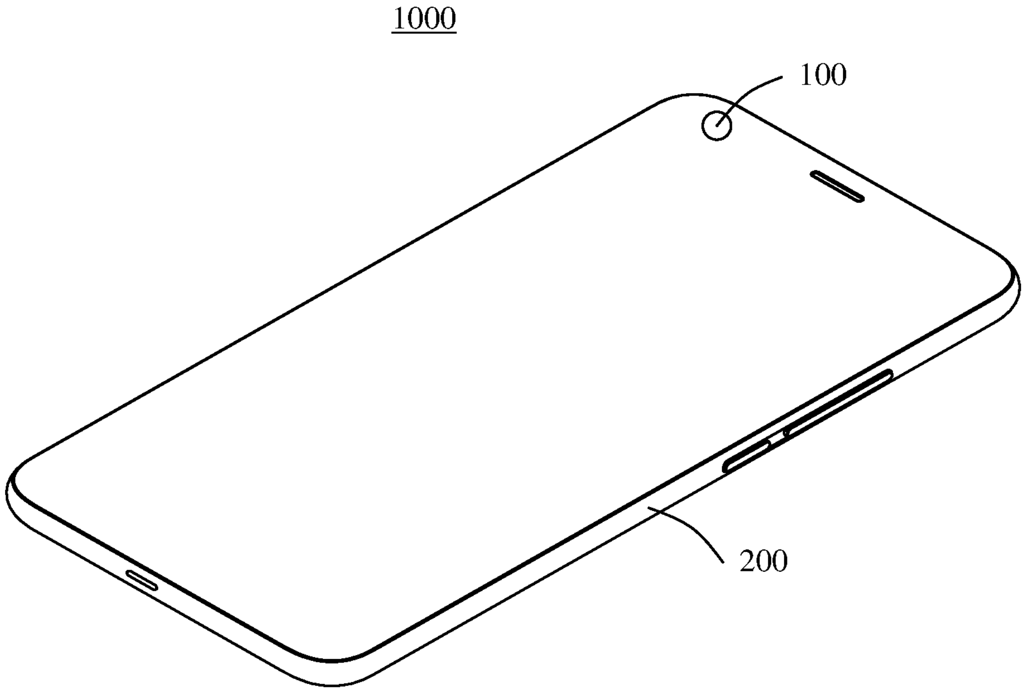


FIG. 23

**INTERNATIONAL SEARCH REPORT**

International application No. **PCT/CN2022/142398**

**A. CLASSIFICATION OF SUBJECT MATTER**

G02B7/09(2021.01)i;G02B15/17(2006.01)i;H04M1/02(2006.01)i;G03B30/00(2021.01)i;G02B13/00(2006.01)i

According to International Patent Classification (IPC) or to both national classification and IPC

**B. FIELDS SEARCHED**

Minimum documentation searched (classification system followed by classification symbols)

IPC： G02B H04M G03B

Documentation searched other than minimum documentation to the extent that such documents are included in the fields searched

Electronic data base consulted during the international search (name of data base and, where practicable, search terms used)

CNABS; CNTXT; CNKI; VEN; ENTXT; ENTXTC: 镜头, 镜筒, 对焦, 非工作, 弹出, 收缩, 伸缩, 长度, 厚度, 相机, lens, non working, stretch, length, thickness, camera

**C. DOCUMENTS CONSIDERED TO BE RELEVANT**

| Category* | Citation of document, with indication, where appropriate, of the relevant passages | Relevant to claim No. |
|---|---|---|
| Y | CN 108121058 A (SAMSUNG ELECTRO-MECHANICS CO., LTD.) 05 June 2018 (2018-06-05)<br>description, paragraphs [0109]-[0125], and figures 10-14 | 1-12 |
| Y | CN 111479043 A (GUANGDONG OPPO MOBILE COMMUNICATIONS CO., LTD.) 31 July 2020 (2020-07-31)<br>description, paragraphs [0058]-[0062], and figures 2-5 | 1-12 |
| Y | CN 212723503 U (JIANGXI JINGCHAO OPTICAL CO., LTD.) 16 March 2021 (2021-03-16)<br>description, paragraphs [0094]-[0202], and figures 1-12 | 1-12 |
| Y | CN 110187469 A (LARGAN PRECISION CO., LTD.) 30 August 2019 (2019-08-30)<br>description, paragraphs [0127]-[0386], and figures 1-24 | 1-12 |
| Y | CN 111464728 A (GUANGDONG OPPO MOBILE COMMUNICATIONS CO., LTD.) 28 July 2020 (2020-07-28)<br>description, paragraphs [0032]-[0056], and figures 1-11 | 1-12 |
| A | CN 106980165 A (CANON INC.) 25 July 2017 (2017-07-25)<br>entire document | 1-12 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 February 2023** | **14 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.
**PCT/CN2022/142398**

| Patent document cited in search report | Publication date (day/month/year) | Patent family member(s) | Publication date (day/month/year) |
|---|---|---|---|
| CN 108121058 A | 05 June 2018 | None | |
| CN 111479043 A | 31 July 2020 | None | |
| CN 212723503 U | 16 March 2021 | None | |
| CN 110187469 A | 30 August 2019 | None | |
| CN 111464728 A | 28 July 2020 | None | |
| CN 106980165 A | 25 July 2017 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202111643718